(19) 

**Europäisches Patentamt**

**European Patent Office**

**Office européen des brevets**

(11) **EP 4 596 647 A1**

(12) **EUROPEAN PATENT APPLICATION**
published in accordance with Art. 153(4) EPC

(43) Date of publication:
**06.08.2025 Bulletin 2025/32**

(21) Application number: **23871920.7**

(22) Date of filing: **26.09.2023**

(51) International Patent Classification (IPC):
*C09D 201/06* (2006.01)  *B05D 1/36* (2006.01)
*B05D 3/02* (2006.01)  *B05D 5/06* (2006.01)
*B05D 7/24* (2006.01)  *C09D 5/02* (2006.01)
*C09D 5/32* (2006.01)  *C09D 7/61* (2018.01)

(52) Cooperative Patent Classification (CPC):
**B05D 1/36; B05D 3/02; B05D 5/06; B05D 7/24;
C09D 5/02; C09D 5/32; C09D 7/61; C09D 201/06**

(86) International application number:
**PCT/JP2023/033345**

(87) International publication number:
**WO 2024/070687 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.09.2022  JP 2022153166**

(71) Applicant: **Kansai Paint Co., Ltd.
Amagasaki-shi, Hyogo 661-8555 (JP)**

(72) Inventor: **UZAWA, Yuji
Hiratsuka-shi, Kanagawa 254-8562 (JP)**

(74) Representative: **IK-IP LTD
3 Lloyd's Avenue
London, Greater London EC3N 3DS (GB)**

(54) **AQUEOUS COATING MATERIAL COMPOSITION, AND METHOD FOR FORMING MULTILAYER COATING FILM**

(57) The purpose of the present invention is to provide an aqueous coating material composition capable of forming a coating film having an excellent finished appearance and glossiness. This aqueous coating material composition contains: (A) a hydroxyl group-containing resin; (B) a curing agent; (C) a photoluminescent pigment; and (D) cellulose nanofibers. The cellulose nanofibers (D) have a carboxyl group amount of 0.80-1.10 mmol/g relative to the absolute dry mass of the cellulose nanofibers and have an average aspect ratio of not less than 20 but less than 50.

EP 4 596 647 A1

**Description**

FIELD

The present invention relates to an aqueous coating composition and a multilayer coating film forming method.

BACKGROUND

The purpose of applying a coating material to an object to be coated is mainly to impart aesthetic appeal and to protect the material, and in the field of automobiles, etc., coating films with a glittering appearance are sometimes used from the viewpoint of aesthetics. It is known that a glitter pigment is added to obtain such a coating film with a glittering appearance.

The glitter pigment is oriented parallel to the surface of the object to be coated, and exhibits a unique design in which the color tone changes depending on the viewing direction.

This characteristic of the color tone changing depending on the viewing direction is referred to as the flip-flop property. The greater the change in the color tone, the higher the flip-flop property, and the better the glittering appearance of the coating film containing the glitter pigment.

Furthermore, coating films that have a preferable finished appearance in addition to an excellent glittering appearance are in high demand as they exude a sense of luxury.

In addition, there has been a recent demand for aqueous coating materials from the viewpoint of reducing environmental impact, etc.

For example, Patent Literature 1 discloses that an aqueous base coating composition containing a glitter pigment obtained by pulverizing a vapor-deposited metal film to produce metal flakes and an aqueous cellulose derivative having an acid value of 20 to 150 mgKOH/ g (solid content), the aqueous cellulose derivative being the main binder resin, and the glitter pigment content being 20 to 70 mass % in terms of PWC, can impart a preferable metallic luster to a coating film.

However, although the coating film obtained from the above-mentioned aqueous base coating composition had a preferable metallic luster, there were cases in which the finishing properties were insufficient.

[CITATION LIST]

[PATENT LITERATURE]

[PTL 1] Japanese Unexamined Patent Publication No. 2009-155537

SUMMARY

[TECHNICAL PROBLEM]

The object of the present invention is to provide an aqueous coating composition which can form a coating film which has excellent finished appearance and glittering appearance.

[SOLUTION TO PROBLEM]

As a result of extensive research into achieving the above-mentioned object, the present inventors have found out that the above-mentioned object can be achieved by an aqueous coating composition comprising a hydroxyl group-containing resin (A), a curing agent (B), a glitter pigment (C), and a cellulose nanofiber (D), wherein the cellulose nanofiber (D) has a carboxyl group content of 0.80 to 1.10 mmol/ g with respect to an absolutely dry mass of the cellulose nanofiber and has an average aspect ratio of 20 or more and less than 50.

According to the present invention, an aqueous coating composition and a multilayer coating film forming method including the following aspects are provided.

<Aspect 1> An aqueous coating composition comprising a hydroxyl group-containing resin (A), a curing agent (B), a glitter pigment (C), and a cellulose nanofiber (D), wherein the cellulose nanofiber (D) has a carboxyl group content of 0.80 to 1.10 mmol/ g with respect to an absolutely dry mass of the cellulose nanofiber and has an average aspect ratio of 20 or more and less than 50.

<Aspect 2> The aqueous coating composition according to Aspect 1, wherein the glitter pigment (C) includes an aluminum pigment.

<Aspect 3> A multilayer coating film forming method comprising in sequence:

step (1) of applying an intermediate coating composition on an object to be coated so as to form an intermediate coating film;

step (2) of applying the aqueous coating composition according to Aspect 1 or 2 on the intermediate coating film which has been formed in the step (1) so as to form a basecoat coating film;

step (3) of applying a clear coating composition on the basecoat coating film which has been formed in the step (2) so as to form a clear coating film; and

step (4) of heating and curing, all at once, the intermediate coating film which has been formed in the step (1), the basecoat coating film which has been formed in the step (2), and the clear coating film which has been formed in the step (3).

[ADVANTAGEOUS EFFECTS OF INVENTION]

The aqueous coating composition of the present invention can form a coating film which has excellent finished appearance and glittering appearance.

DESCRIPTION OF EMBODIMENTS

Hereinbelow, the aqueous coating composition of the present invention (hereinbelow which may simply be referred to as "the present coating material") is described in further detail.

Aqueous coating composition

The aqueous coating composition of the present invention is an aqueous coating composition comprising a hydroxyl group-containing resin (A), a curing agent (B), a glitter pigment (C), and a cellulose nanofiber (D), wherein the cellulose nanofiber (D) has a carboxyl group content of 0.80 to 1.10 mmol/ g with respect to an absolutely dry mass of the cellulose nanofiber and has an average aspect ratio of 20 or more and less than 50.

Incidentally, in the present description, the term "aqueous coating material" is a term that is contrasted with organic solvent-based coating material, and generally means a coating material in which a coating film-forming resin, pigment, etc., are dispersed and/ or dissolved in water or a medium mainly composed of water (aqueous medium). Furthermore, the organic solvent-based coating material is a coating material that does not substantially contain water as a solvent, or in which all or most of the solvent is an organic solvent.

Hydroxyl group-containing resin (A)

The hydroxyl group-containing resin (A) is not particularly limited as long as it is a resin that contains a hydroxyl group. Specific examples of the types of hydroxyl group-containing resin (A) include acrylic resin, polyester resin, polyether resin, polycarbonate resin, polyurethane resin, etc. **In** particular, hydroxyl group-containing acrylic resin (A1), hydroxyl group-containing polyester resin (A2), and hydroxyl group-containing polyurethane resin (A3) can be preferably used as the hydroxyl group-containing resin (A).

Hydroxyl group-containing acrylic resin (A1)

The hydroxyl group-containing acrylic resin (A1) can be produced, for example, by copolymerizing a hydroxyl group-containing polymerizable unsaturated monomer and another polymerizable unsaturated monomer that can be copolymerized with the hydroxyl group-containing polymerizable unsaturated monomer by a method known per se, such as a solution polymerization method in an organic solvent or an emulsion polymerization method in water.

The above-mentioned hydroxyl group-containing polymerizable unsaturated monomer is a compound having one or more hydroxyl groups and one or more polymerizable unsaturated bonds in one molecule. Examples of the hydroxyl group-containing polymerizable unsaturated monomer include monoesters of (meth)acrylic acid and dihydric alcohols having 2 to 8 carbon numbers such as 2-hydroxyethyl (meth)acrylate, 2-hydroxypropyl (meth)acrylate, 3-hydroxypropyl (meth)acrylate, 4-hydroxybutyl (meth)acrylate, etc.; ε-caprolactone-modified monoesters of the aforementioned (meth) acrylic acid and dihydric alcohols having 2 to 8 carbon numbers; N-hydroxymethyl (meth)acrylamide; allyl alcohol, and (meth)acrylates having polyoxyethylene chains with hydroxyl groups at the molecular terminals, etc. It should be noted that, monomers falling under the later-mentioned "(xvii) Polymerizable unsaturated monomers having an ultraviolet absorbing functional group" should be defined as the above-mentioned another polymerizable unsaturated monomer that can be copolymerized with the hydroxyl group-containing polymerizable unsaturated monomers, and are excluded from the hydroxyl group-containing polymerizable unsaturated monomers. The aforementioned can be used alone or in combination of two or more types.

The above-mentioned another polymerizable unsaturated monomer that can be copolymerized with the hydroxyl group-containing polymerizable unsaturated monomers include, for example, the following monomers (i) to (xx). These polymerizable unsaturated monomers can be used alone or in combination of two or more types.

(i) Alkyl or cycloalkyl (meth)acrylate: for example, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-hexyl (meth)acrylate, n-octyl (meth)acrylate, 2-ethylhexyl (meth)acrylate, nonyl (meth)acrylate, tridecyl (meth)acrylate, lauryl (meth)acrylate, stearyl (meth)acrylate, isostearyl (meth)acrylate, cyclohexyl (meth)acrylate, methylcyclohexyl (meth)acrylate, t-butylcyclohexyl (meth)acrylate, cyclododecyl (meth)acrylate, tricyclodecanyl (meth)acrylate, etc.

(ii) Polymerizable unsaturated monomers having an isobornyl group: isobornyl (meth)acrylate, etc.

(iii) Polymerizable unsaturated monomers having an adamantyl group: adamantyl (meth)acrylate, etc.

(iv) Polymerizable unsaturated monomers having a tricyclodecenyl group: tricyclodecenyl (meth)acrylate, etc.

(v) Polymerizable unsaturated monomers containing an aromatic ring: benzyl (meth)acrylate, styrene, $\alpha$-methyl-styrene, vinyltoluene, etc.

(vi) Polymerizable unsaturated monomers having an alkoxysilyl group: vinyltrimethoxysilane, vinyltriethoxysilane, vinyltris(2-methoxyethoxy)silane, $\gamma$-(meth)acryloyloxypropyltrimethoxysilane, $\gamma$-(meth)acryloyloxypropyltriethoxysilane, etc.

(vii) Polymerizable unsaturated monomers having a fluorinated alkyl group:

perfluoroalkyl(meth)acrylates such as perfluorobutylethyl(meth)acrylate and perfluorooctylethyl(meth)acrylate; fluoroolefins, etc.

(viii) Polymerizable unsaturated monomers having a photopolymerizable functional group such as a maleimide group.

(ix) Vinyl compounds: N-vinylpyrrolidone, ethylene, butadiene, chloroprene, vinyl propionate, vinyl acetate, etc.

(x) Carboxyl group-containing polymerizable unsaturated monomers: (meth)acrylic acid, maleic acid, crotonic acid, $\beta$-carboxyethyl (meth)acrylate, etc.

(xi) Nitrogen-containing polymerizable unsaturated monomers: (meth)acrylonitrile, (meth)acrylamide, N,N-dimethylaminoethyl (meth)acrylate, N,N-diethylaminoethyl (meth)acrylate, N,N-dimethylaminopropyl (meth)acrylamide, methylene bis(meth)acrylamide, ethylene bis(meth)acrylamide, adducts of glycidyl (meth)acrylate and amine compounds, etc.

(xii) Polymerizable unsaturated monomers having two or more polymerizable unsaturated groups in one molecule: allyl (meth)acrylate, ethylene glycol di(meth)acrylate, 1,4-butanediol di(meth)acrylate, neopentyl glycol di(meth)acrylate, 1,6-hexanediol di(meth)acrylate, etc.

(xiii) Epoxy group-containing polymerizable unsaturated monomers: glycidyl (meth)acrylate, $\beta$-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate, allyl glycidyl ether, etc.

(xiv) (Meth)acrylate having a polyoxyethylene chain with an alkoxy group at the molecular terminal

(xv) Polymerizable unsaturated monomers having a sulfonic acid group: 2-acrylamido-2-methylpropanesulfonic acid, 2-sulfoethyl (meth)acrylate, allylsulfonic acid, 4-styrenesulfonic acid, etc.; sodium salts and ammonium salts of these sulfonic acids, etc.

(xvi) Polymerizable unsaturated monomers having a phosphoric acid group: acid phosphooxyethyl (meth)acrylate, acid phosphooxypropyl (meth)acrylate, acid phosphooxypoly(oxyethylene)glycol (meth)acrylate, acid phosphooxypoly(oxypropylene)glycol (meth)acrylate, etc.

(xvii) Polymerizable unsaturated monomers having an ultraviolet absorbing functional group: 2-hydroxy-4-(3-methacryloyloxy-2-hydroxypropoxy)benzophenone, 2-hydroxy-4-(3-acryloyloxy-2-hydroxypropoxy)benzophenone, 2,2'-dihydroxy-4-(3-methacryloyloxy-2-hydroxypropoxy)benzophenone, 2,2'-dihydroxy-4-(3-acryloyloxy-2-hydroxypropoxy)benzophenone, 2-[2-hydroxy-5-[2-(methacryloyloxy)ethyl]phenyl]-2H-benzotriazole, etc.

(xviii) Light-stable polymerizable unsaturated monomers: 4-(meth)acryloyloxy-1,2,2,6,6-pentamethylpiperidine, 4-(meth)acryloyloxy-2,2,6,6-tetramethylpiperidine, 4-cyano-4-(meth)acryloylamino-2,2,6,6-tetramethylpiperidine, 1-(meth)acryloyl-4-(meth)acryloylamino-2,2,6,6 -tetramethylpiperidine, 1-(meth)acryloyl-4-cyano-4-(meth)acryloylamino-2,2,6,6-tetramethylpiperidine, 4-crotonoyloxy-2,2,6,6-tetramethylpiperidine, 4-crotonoylamino-2,2,6,6-tetramethylpiperidine, 1-crotonoyl-4-crotonoyloxy-2,2,6,6-tetramethylpiperidine, etc.

(xix) Polymerizable unsaturated monomers having a carbonyl group: acrolein, diacetone acrylamide, diacetone methacrylamide, acetoacetoxyethyl methacrylate, formyl styrene, vinyl alkyl ketones having 4 to 7 carbon atoms (for example, vinyl methyl ketone, vinyl ethyl ketone, vinyl butyl ketone), etc.

(xx) Polymerizable unsaturated monomers having an acid anhydride group: maleic anhydride, itaconic anhydride, citraconic anhydride, etc.

In the present description, a polymerizable unsaturated group means an unsaturated group capable of radical polymerization. Examples of such polymerizable unsaturated groups include vinyl groups and (meth)acryloyl groups.

Furthermore, in the present description, "(meth)acrylate" means acrylate and/ or methacrylate. "(Meth)acrylic acid" means acrylic acid and/ or methacrylic acid. "(Meth)acryloyl" means acryloyl and/ or methacryloyl. "(Meth) acrylamide" means acrylamide and/ or methacrylamide.

The proportion of the above-mentioned hydroxyl group-containing polymerizable unsaturated monomer used in producing the hydroxyl group-containing acrylic resin (A1) is preferably 1 to 50 mass % by mass, more preferably 2 to 40 mass %, and even more preferably 3 to 30 mass %, based on the total amount of the monomer components.

From the viewpoint of the finished appearance of the resulting coating film, etc., the hydroxyl group-containing acrylic resin (A1) preferably has a hydroxyl value of 1 to 150 mgKOH/ g, more preferably 2 to 120 mgKOH/ g, and even more preferably 5 to 100 mgKOH/ g.

From the viewpoint of the storage stability of the coating material and the water resistance of the resulting coating film, etc., the hydroxyl group-containing acrylic resin (A1) preferably has an acid value of 1 to 150 mgKOH/ g, more preferably 5 to 100 mgKOH/ g, and even more preferably 5 to 80 mgKOH/ g.

In a case where the aqueous coating composition of the present invention contains the above-mentioned hydroxyl group-containing acrylic resin (A1), the content of the hydroxyl group-containing acrylic resin (A1) is preferably 2 to 70 mass %, more preferably 5 to 50 mass %, and even more preferably 10 to 40 mass %, based on the amount of resin solid content in the aqueous coating composition.

In addition, the above-mentioned hydroxyl group-containing acrylic resin (A1) is preferably hydroxyl group-containing acrylic resin particles having a core-shell structure (A1').

Hydroxyl group-containing acrylic resin particles having a core-shell structure (A1')

In the present invention, the "shell portion" of the "hydroxyl group-containing acrylic resin particles having a core-shell structure (A1')" refers to the polymer layer present in the outermost layer of the resin particle, the "core portion" refers to the polymer layer in the inner layer of the resin particle excluding the shell portion, and "having a core-shell structure" refers to a structure having the core portion and shell portion.

Note that, hereinafter, "hydroxyl group-containing acrylic resin particles having a core-shell structure (A1')" may be simply referred to as "hydroxyl group-containing acrylic resin particles (A1')".

The core-shell structure is generally a layered structure in which the core portion is completely covered by the shell portion, however, depending on the mass ratio, etc., of the core portion and the shell portion, there may be cases where the amount of monomer in the shell portion is insufficient to form a layered structure. In such a case, it is not necessary to have a completely layered structure as described above, and a structure in which the shell portion covers only a portion of the core portion may also be used.

The hydroxyl group-containing acrylic resin particles (A1') are generally acrylic resin particles consisting of a core portion which is a copolymer (I) containing a polymerizable unsaturated monomer as a copolymerization component, and a shell portion which is a copolymer (II) containing a polymerizable unsaturated monomer as a copolymerization component. The polymerizable unsaturated monomer can be an appropriate combination of the hydroxyl group-containing polymerizable unsaturated monomer and another polymerizable unsaturated monomer that is copolymerizable with the hydroxyl group-containing polymerizable unsaturated monomer.

By using the above-mentioned polymerizable unsaturated monomer having two or more polymerizable unsaturated groups in one molecule as the above-mentioned polymerizable unsaturated monomer, a copolymer crosslinked structure can be imparted. When using the above-mentioned polymerizable unsaturated monomer having two or more polymerizable unsaturated groups in one molecule, the proportion of the monomer used may be appropriately determined according to the degree of crosslinking of the copolymer, however, it is usually preferable that the proportion is within the range of approximately 0.1 to 30 mass %, particularly approximately 0.5 to 10 mass %, and more particularly approximately 1 to 7 mass %, with respect to the total amount of the polymerizable unsaturated monomer.

The hydroxyl group-containing acrylic resin particles (A1') may be obtained by emulsion-polymerizing a polymerizable unsaturated monomer mixture to obtain an emulsion of the core portion copolymer (I), followed by adding a polymerizable unsaturated monomer mixture to this emulsion, and further emulsion-polymerizing the same to prepare the shell portion copolymer (II).

The emulsion polymerization for preparing the emulsion of the core portion copolymer (I) may be carried out by a conventionally known method. For example, it may be carried out by emulsion polymerizing a mixture of polymerizable unsaturated monomers using a polymerization initiator in the presence of an emulsifier.

As the emulsifier, anion-based emulsifiers and nonion-based emulsifiers may be suitably used.

Examples of the anion-based emulsifier include sodium salts and ammonium salts of alkylsulfonic acid, alkylbenzenesulfonic acid, alkylphosphate, etc. Furthermore, examples of nonion-based emulsifiers include polyoxyethylene oleyl ether, polyoxyethylene stearyl ether, polyoxyethylene lauryl ether, polyoxyethylene tridecyl ether, polyoxyethylene phenyl ether, polyoxyethylene nonylphenyl ether, polyoxyethylene octylphenyl ether, polyoxyethylene monolaurate, polyoxyethylene monostearate, polyoxyethylene monooleate, sorbitan monolaurate, sorbitan monostearate, sorbitan trioleate, polyoxyethylene sorbitan monolaurate, etc.

Furthermore, polyoxyalkylene group-containing anionic emulsifiers having an anionic group and a polyoxyalkylene group such as a polyoxyethylene group or a polyoxypropylene group, etc., in one molecule; reactive anionic emulsifiers having an anionic group and a radically polymerizable unsaturated group in one molecule, etc. may also be used.

Examples of the above-mentioned reactive anionic emulsifiers include sodium salts of sulfonic acid compounds having radically polymerizable unsaturated groups such as allyl groups, methallyl groups, (meth)acryloyl groups, propenyl groups, butenyl groups, etc., and ammonium salts of the sulfonic acid compounds.

The amount of the above-mentioned emulsifiers used is preferably approximately 0.1 to 15 mass %, particularly preferably approximately 0.5 to 10 mass %, and even more particularly preferably within the range of approximately 1 to 5 mass %, with respect to the total amount of monomers used.

The polymerization initiator may be, for example, organic peroxides such as benzoyl peroxide, octanoyl peroxide, lauroyl peroxide, stearoyl peroxide, cumene hydroperoxide, tert-butyl peroxide, tert-butyl peroxy laurate, tert-butyl peroxy isopropyl carbonate, tert-butyl peroxy acetate, and diisopropylbenzene hydroperoxide, etc.; azo compounds such as azobisisobutyronitrile, azobis(2,4-dimethylvaleronitrile), azobis(2-methylpropiononitrile), azobis(2-methylbutyronitrile), 4,4'-azobis(4-cyanobutanoic acid), dimethylazobis(2-methylpropionate), azobis[2-methyl-N-(2-hydroxyethyl)-propionamide], and azobis{2-methyl-N-[2-(1-hydroxybutyl)]-propionamide}, etc.; persulfates such as potassium persulfate, ammonium persulfate, and sodium persulfate, etc. These polymerization initiators may be used alone or in combination of two types or more. Furthermore, if necessary, the polymerization initiator may be used in combination with a reducing agent such as sugar, sodium formaldehyde sulfoxylate, or an iron complex, etc., to be used as a redox initiator.

The amount of the polymerization initiator used is generally preferably approximately 0.1 to 5 mass %, and particularly preferably approximately 0.2 to 3 mass %, with respect to the total amount of all monomers used. The method of adding the polymerization initiator is not particularly limited and may be appropriately selected depending on the type, the amount, etc., thereof. For example, the polymerization initiator may be contained in a monomer mixture or an aqueous medium in advance, or may be added all at once or dropwise during polymerization.

Hydroxyl group-containing acrylic resin particles (A1') may be obtained by adding a polymerizable unsaturated monomer mixture to the emulsion of the core portion copolymer (I) obtained above, and further polymerizing the same to form the shell portion copolymer (II).

The monomer mixture to form the shell portion copolymer (II) may contain components such as the above-mentioned polymerization initiator, chain transfer agent, reducing agent, emulsifier, etc., as necessary. Furthermore, the monomer mixture may be dropped as it is, however, it is preferable to drop the same as a monomer emulsion obtained by dispersing the monomer mixture in an aqueous medium. **In** this case, the particle size of the monomer emulsion is not particularly limited.

As a polymerization method of the monomer mixture to form the shell portion copolymer (II), for example, the monomer mixture or the emulsion thereof may be added all at once or gradually dropwise to the emulsion of the core portion copolymer (I) described above, and heated to an appropriate temperature while stirring.

The hydroxyl group-containing acrylic resin particles (A1') thus obtained have a multilayer structure with the copolymer (I) as the core portion and the copolymer (II) as the shell portion.

**In** a case where the aqueous coating composition of the present invention contains the above-mentioned hydroxyl group-containing acrylic resin particles (A1'), the content of the hydroxyl group-containing acrylic resin particles (A1') is preferably 2 to 70 mass %, more preferably 5 to 50 mass %, and even more preferably 10 to 40 mass %, based on the amount of resin solid content in the aqueous coating composition.

Hydroxyl group-containing polyester resin (A2)

The hydroxyl group-containing polyester resin (A2) may be synthesized by a known method, following a conventional method, by esterifying a polybasic acid with a polyhydric alcohol.

Polybasic acids are compounds that have two or more carboxyl groups in one molecule, such as phthalic acid, isophthalic acid, terephthalic acid, succinic acid, adipic acid, azelaic acid, sebacic acid, tetrahydrophthalic acid, hexahydrophthalic acid, maleic acid, fumaric acid, itaconic acid, trimellitic acid, pyromellitic acid, and anhydrides of the aforementioned. Furthermore, the polyhydric alcohols are compounds that have two or more hydroxyl groups in one molecule, such as diols such as ethylene glycol, propylene glycol, 1,3-propanediol, 1,4-butanediol, 1,5-pentanediol, 1,6-hexanediol, 2,2-diethyl-1,3-propanediol, neopentyl glycol, 1,9-nonanediol, 1,4-cyclohexanediol, hydroxypivalic acid neopentyl glycol ester, 2-butyl-2-ethyl-1,3-propanediol, 3-methyl-1,5-pentanediol, 2,2,4-trimethylpentanediol, and hydrogenated bisphenol A, etc., and trivalent or higher polyol components such as trimethylolpropane, trimethylolethane, glycerin, and pentaerythritol, etc., as well as hydroxycarboxylic acids such as 2,2-dimethylolpropionic acid, 2,2-dimethylolbutanoic acid, 2,2-dimethylolpentanoic acid, 2,2-dimethylolhexanoic acid, and 2,2-dimethyloloctanoic acid, etc.

Furthermore, α-olefin epoxides such as propylene oxide and butylene oxide, etc., and monoepoxy compounds such as Cardura E10 (HEXION Specialty Chemicals, product name, glycidyl ester of synthetic highly branched saturated fatty acid) may be reacted with an acid to introduce these compounds into the polyester resin.

The hydroxyl group-containing polyester resin (A2) may be a fatty acid-modified polyester resin modified with (semi)drying oil fatty acids such as linseed oil fatty acid, coconut oil fatty acid, safflower oil fatty acid, soybean oil fatty acid, sesame oil fatty acid, perilla oil fatty acid, hemp oil fatty acid, tall oil fatty acid, and dehydrated castor oil fatty acid. The modification amount of these fatty acids is generally suitable to be 30 mass % or less in terms of oil length. Furthermore, the hydroxyl group-containing polyester resin (A2) may also be a resin partially reacted with a monobasic acid such as benzoic acid.

Furthermore, the above-mentioned hydroxyl group-containing polyester resin (A2) may be modified with fatty acids, monoepoxy compounds, polyisocyanate compounds, acrylic resins, etc., during or after the preparation of the resin.

Examples of the above-mentioned fatty acids include coconut oil fatty acids, cottonseed oil fatty acids, hemp seed oil fatty acids, rice bran oil fatty acids, fish oil fatty acids, tall oil fatty acids, soybean oil fatty acids, linseed oil fatty acids, tung oil fatty acids, rapeseed oil fatty acids, castor oil fatty acids, dehydrated castor oil fatty acids, safflower oil fatty acids, etc. As the monoepoxy compounds, for example, "Cardura E10P" (product name, manufactured by HEXION INC., glycidyl ester of synthetic highly branched saturated fatty acid) may be suitably used.

Furthermore, the above-mentioned polyisocyanate compounds include, for example, aliphatic diisocyanate compounds such as lysine diisocyanate, hexamethylene diisocyanate, and trimethylhexane diisocyanate, etc.; alicyclic diisocyanate compounds such as hydrogenated xylylene diisocyanate, isophorone diisocyanate, methylcyclohexane-2,4-diisocyanate, methylcyclohexane-2,6-diisocyanate, 4,4'-methylenebis(cyclohexylisocyanate), and 1,3-(isocyanatomethyl)cyclohexane, etc.; aromatic diisocyanate compounds such as tolylene diisocyanate, xylylene diisocyanate, and diphenylmethane diisocyanate, etc.; organic polyisocyanates themselves, such as tri- or higher valent polyisocyanates, etc., such as lysine triisocyanate, etc.; adducts of the aforementioned organic polyisocyanates with polyhydric alcohols, low molecular weight polyester resins, water, etc.; cyclized polymers of the aforementioned organic polyisocyanates with each other (e.g., isocyanurates), biuret-type adducts, etc. These polyisocyanate compounds may be used alone or in combination of two or more types.

Furthermore, the hydroxyl group-containing polyester resin (A2) may be modified with an acrylic resin by known methods, such as a method of polymerizing a mixture of a polymerizable unsaturated group-containing polyester resin and a polymerizable unsaturated monomer, and a method of reacting a hydroxyl group- and carboxyl group-containing polyester resin with an acrylic resin, etc.

The hydroxyl group-containing polyester resin (A2) preferably has a hydroxyl value of 1 to 250 mgKOH/ g, more preferably 2 to 200 mgKOH/ g, and even more preferably 5 to 200 mgKOH/ g. Furthermore, the hydroxyl group-containing polyester resin (A2) preferably has an acid value of 1 to 150 mgKOH/ g, more preferably 2 to 100 mgKOH/ g, and even more preferably 2 to 50 mgKOH/ g.

The weight average molecular weight of the hydroxyl group-containing polyester resin (A2) is preferably 3,000 to 100,000, more preferably 4,000 to 50,000, and even more preferably 5,000 to 30,000.

Incidentally, in the present description, the average molecular weight is a value calculated based on the molecular weight of standard polystyrene from a chromatogram measured by a gel permeation chromatograph. The gel permeation chromatograph used was "HLC8120GPC" (manufactured by TOSOH CORPORATION). Four columns, "TSKgel G-4000HXL", "TSKgel G-3000HXL", "TSKgel G-2500HXL", and "TSKgel G-2000HXL" (all product names manufactured by TOSOH CORPORATION), were used, and the conditions were as follows: mobile phase: tetrahydrofuran, measurement temperature: 40°C, flow rate: 1 mL/min, and detector: RI.

**In** a case where the aqueous coating composition of the present invention contains the above-mentioned hydroxyl group-containing polyester resin (A2), the content of the hydroxyl group-containing polyester resin (A2) is preferably 2 to 70 mass %, more preferably 5 to 50 mass %, and even more preferably 5 to 40 mass %, based on the amount of resin solid content in the aqueous coating composition.

Hydroxyl group-containing polyurethane resin (A3)

The hydroxyl group-containing polyurethane resin (A3) may be obtained by reacting, for example, a polyol with a polyisocyanate compound in a conventional manner. Furthermore, after the reaction, the chain can be extended in the presence of a chain extender, which is a low molecular weight compound having at least two active hydrogens in one molecule, such as a diol or diamine, etc. The resin may also be modified with an acrylic resin, etc., during or after preparation.

The above-mentioned polyols include, for example, as those with a low molecular weight, dihydric alcohols such as ethylene glycol, diethylene glycol, propylene glycol, butylene glycol, and hexamethylene glycol, etc., and trihydric alcohols such as trimethylolpropane, glycerin, and pentaerythritol, etc. As those with a high molecular weight, polyether polyols, polyester polyols, acrylic polyols, and epoxy polyols, etc., may be mentioned. Examples of polyether polyols include polyethylene glycol, polypropylene glycol, and polytetramethylene glycol, etc. Examples of polyester polyols include polycondensates of alcohols such as the above-mentioned dihydric alcohols, dipropylene glycol, 1,4-butanediol, 1,6-hexanediol, and neopentyl glycol, etc., with dibasic acids such as adipic acid, azelaic acid, and sebacic acid, etc., lactone-based ring-opening polymer polyols such as polycaprolactone, etc., and polycarbonate diols, etc. Furthermore, for example, carboxyl group-containing polyols such as 2,2-dimethylolpropionic acid, 2,2-dimethylolbutanoic acid, etc., may also be used. The above-mentioned polyols may be used alone or in combination of two or more types.

Examples of polyisocyanate compounds that may be reacted with the above-mentioned polyols include aliphatic polyisocyanates such as hexamethylene diisocyanate, trimethylhexamethylene diisocyanate, dimer acid diisocyanate, and lysine diisocyanate, etc.; and biuret-type adducts and isocyanurate ring adducts of the aforementioned polyisocyanates; alicyclic diisocyanates such as isophorone diisocyanate, 4,4'-methylenebis(cyclohexyl isocyanate), methylcyclohexane-2,4-(or - 2,6-) diisocyanate, 1,3-(or 1,4-)di(isocyanatomethyl)cyclohexane, 1,4-cyclohexane diisocyanate, 1,3-cyclopentane diisocyanate, and 1,2-cyclohexane diisocyanate, etc.; and biuret-type adducts and isocyanurate ring adducts of the aforementioned polyisocyanates; aromatic diisocyanate compounds such as xylylene diisocyanate, meta-xylylene diisocyanate, tetramethylxylylene diisocyanate, tolylene diisocyanate, 4,4'-diphenylmethane diisocyanate, 1,5-naphthalene diisocyanate, 1,4-naphthalene diisocyanate, 4,4-toluidine diisocyanate, 4,4'-diphenyl ether diisocyanate, (m- or p-)phenylene diisocyanate, 4,4'-biphenylene diisocyanate, 3,3'-dimethyl-4,4'-biphenylene diisocyanate, bis(4-isocyanatophenyl)sulfone, and isopropylidenebis(4-phenylisocyanate), etc.; and biuret-type adducts and isocyanurate ring adducts of the aforementioned polyisocyanates; polyisocyanates having three or more isocyanate groups in one molecule, such as triphenylmethane-4,4',4''-triisocyanate, 1,3,5-triisocyanatobenzene, 2,4,6-triisocyanatotoluene, and 4,4'-dimethyldiphenylmethane-2,2',5,5'-tetraisocyanate, etc.; and biuret-type adducts and isocyanurate ring adducts of the aforementioned polyisocyanate compounds.

The diols as chain extenders include, for example, ethylene glycol, 1,4-butanediol, 1,5-pentanediol, 3-methyl-1,5-pentanediol, and cyclohexanediol, etc., and diamines include, for example, ethylenediamine, propylenediamine, xylylenediamine, and N-(2-hydroxyethyl)ethylenediamine, etc.

The hydroxyl group-containing polyurethane resin (A3) preferably has a hydroxyl value of 1 to 250 mgKOH/ g, more preferably 2 to 200 mgKOH/ g, and even more preferably 5 to 200 mgKOH/ g.

Furthermore, from the viewpoint of production stability and the water resistance of the resulting coating film, the acid value of the hydroxyl group-containing polyurethane resin (A3) is preferably 1 to 100 mgKOH/ g, more preferably 2 to 50 mgKOH/ g, and even more preferably 2 to 30 mgKOH/ g.

Furthermore, the weight average molecular weight of the hydroxyl group-containing polyurethane resin (A3) is preferably 3,000 or more, more preferably 5,000 or more, and even more preferably 10,000 or more.

In a case where the aqueous coating composition of the present invention contains the above-mentioned hydroxyl group-containing polyurethane resin (A3), the content of the hydroxyl group-containing polyurethane resin (A3) is preferably 2 to 70 mass %, more preferably 5 to 50 mass %, and even more preferably 10 to 40 mass %, based on the amount of resin solid content in the aqueous coating composition.

Curing agent (B)

The curing agent (B) is a compound that can react with the hydroxyl group in the hydroxyl group-containing resin (A) to cure the aqueous coating composition of the present invention. Examples of the curing agent (B) include polyisocyanate compounds, blocked polyisocyanate compounds (B1), and melamine resins (B2), etc. Among the aforementioned, blocked polyisocyanate compounds (B1) and melamine resins (B2) are preferable, and blocked polyisocyanate compounds (B1) are particularly preferable, from the viewpoint of excellent productivity since the same does not require a mixing process of coating materials. The curing agent (B) may be used alone or in combination of two types or more.

Blocked polyisocyanate compound (B1)

The blocked polyisocyanate compound (B1) is a compound in which the isocyanate group of the polyisocyanate compound (b1) is blocked with a blocking agent (b2).

Polyisocyanate compound (b1)

The polyisocyanate compound (b1) is a compound having at least two isocyanate groups in one molecule, and examples thereof include aliphatic polyisocyanates, alicyclic polyisocyanates, araliphatic polyisocyanates, aromatic polyisocyanates, and derivatives thereof, as well as any combination thereof.

Above-mentioned aliphatic polyisocyanates include, for example, aliphatic diisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and methyl 2,6-diisocyanatohexanoate (common name: lysine diisocyanate), etc.; and aliphatic triisocyanates such as 2-isocyanatoethyl 2,6-diisocyanatohexanoate, 1,6-diisocyana-to-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane, etc.

The above-mentioned alicyclic polyisocyanates include, for example, alicyclic diisocyanates such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), 4-methyl-1,3-cyclohexylene diisocyanate (common name: hydrogenated TDI), 2-methyl-1,3-cyclohexylene diisocyanate, 1,3- or 1,4-bis(isocyanatomethyl)cyclohexane (common name: hydrogenated xylylene diisocyanate) or a mixture thereof, methylenebis(4,1-cyclohexanediyl) diisocyanate (common name: hydrogenated MDI), norbornane diisocyanate, etc.; and alicyclic triisocyanates such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)heptane, 6-(2-isocyanatoethyl)-2-isocyanatomethyl-2-(3-isocyanatopropyl)-bicyclo(2.2.1)heptane, etc.

The above-mentioned araliphatic polyisocyanates include, for example, araliphatic diisocyanates such as methylenebis(4,1-phenylene)diisocyanate (common name: MDI), 1,3- or 1,4-xylylene diisocyanate or mixtures thereof, ω,ω'-diisocyanato-1,4-diethylbenzene, 1,3- or 1,4-bis(1-isocyanato-1-methylethyl)benzene (common name: tetramethylxylylene diisocyanate) or mixtures thereof, etc.; and araliphatic triisocyanates such as 1,3,5-triisocyanatomethylbenzene, etc.

The above-mentioned aromatic polyisocyanates include, for example, aromatic diisocyanates such as m-phenylene diisocyanate, p-phenylene diisocyanate, 4,4'-diphenyl diisocyanate, 1,5-naphthalene diisocyanate, 2,4-tolylene diisocyanate (common name: 2,4-TDI) or 2,6-tolylene diisocyanate (common name: 2,6-TDI) or a mixture thereof, 4,4'-toluidine diisocyanate, 4,4'-diphenyl ether diisocyanate, etc.; aromatic triisocyanates such as triphenylmethane-4,4',4"-triisocyanate, 1,3,5-triisocyanatobenzene, 2,4,6-triisocyanatotoluene, etc.; and aromatic tetraisocyanates such as 4,4'-diphenylmethane-2,2',5,5'-tetraisocyanate, etc.

Furthermore, the above-mentioned derivatives include, for example, dimers, trimers, biurets, allophanates, uretdione, uretoimine, isocyanurates, oxadiazinetriones, polymethylene polyphenyl polyisocyanates (crude MDI, polymeric MDI), crude TDI, etc., of the above-mentioned polyisocyanates.

As the polyisocyanate compound (b1), aliphatic diisocyanates, alicyclic diisocyanates, and derivatives thereof are preferable because the resulting blocked polyisocyanate compound (B) is less likely to change yellow when heated, and among the aforementioned, aliphatic diisocyanates and derivatives thereof are more preferable from the viewpoint of improving the flexibility of the coating film to be formed.

In addition, the polyisocyanate compounds (b1) include prepolymers produced by reacting aliphatic polyisocyanates, alicyclic polyisocyanates, araliphatic polyisocyanates, aromatic polyisocyanates, and derivatives thereof, as well as any combination thereof, with a compound capable of reacting with the above-mentioned polyisocyanates under conditions in which the isocyanate groups are excessively present. Examples of compounds capable of reacting with the polyisocyanates include compounds having active hydrogen groups such as hydroxyl groups and amino groups, etc., and specific examples include polyhydric alcohols, low molecular weight polyester resins, amines, water, etc.

Furthermore, the polyisocyanate compound (b1) also includes a polymer of an isocyanate group-containing polymerizable unsaturated monomer, or a copolymer of the above-mentioned isocyanate group-containing polymerizable unsaturated monomer and a polymerizable unsaturated monomer other than the above-mentioned isocyanate group-containing polymerizable unsaturated monomer.

The polyisocyanate compound (b1) may have a number average molecular weight within the range of preferably 300 to 20,000, more preferably 400 to 8,000, and even more preferably 500 to 2,000, from the viewpoint of the reactivity of the resulting blocked polyisocyanate compound (B1) and the compatibility of the blocked polyisocyanate compound (B1) with other coating material components.

Furthermore, the polyisocyanate compound (b1) preferably has an average number of isocyanate functional groups in one molecule within the range of 2 to 100, from the viewpoint of the reactivity of the resulting blocked polyisocyanate compound (B1) and the compatibility of the blocked polyisocyanate compound (B1) with other coating material components. The average number of isocyanate functional groups is more preferably 3 or more, from the viewpoint of increasing the reactivity of the resulting blocked polyisocyanate compound (B1). The average number of isocyanate functional groups is more preferably 20 or less, from the viewpoint of preventing gelation during production of the blocked polyisocyanate compound (B1).

Blocking agent (b2)

The blocking agents (b2) that block the isocyanate groups in the polyisocyanate compound (b1) include, for example, active methylene-based, alcohol-based, phenol-based, oxime-based, amine-based, acid amide-based, imidazole-based, pyridine-based, and mercaptan-based blocking agents, and these blocking agents may be used alone or in combination of two types or more.

From the viewpoint of low-temperature curing properties, it is preferable that at least a portion of the blocking agent in the above blocking agent (b2) is an active methylene-based blocking agent, and it is even more preferable that the blocking agent is an active methylene-based blocking agent.

Examples of the active methylene-based blocking agents include malonic acid diesters such as dimethyl malonate, diethyl malonate, di-n-propyl malonate, diisopropyl malonate, di-n-butyl malonate, diisobutyl malonate, disec-butyl malonate, di-tert-butyl malonate, di-n-pentyl malonate, di-n-hexyl malonate, di(2-ethylhexyl) malonate, methyl isopropyl malonate, ethyl isopropyl malonate, methyl n-butyl malonate, ethyl n-butyl malonate, methyl isobutyl malonate, ethyl isobutyl malonate, methyl sec-butyl malonate, ethyl sec-butyl malonate, diphenyl malonate, and dibenzyl malonate, etc.; acetoacetate esters such as methyl acetoacetate, ethyl acetoacetate, n-propyl acetoacetate, isopropyl acetoacetate, n-butyl acetoacetate, isobutyl acetoacetate, sec-butyl acetoacetate, tert-butyl acetoacetate, n-pentyl acetoacetate, n-hexyl acetoacetate, 2-ethylhexyl acetoacetate, phenyl acetoacetate, and benzyl acetoacetate, etc.; isobutyryl acetate esters such as methyl isobutyryl acetate, ethyl isobutyryl acetate, n-propyl isobutyryl acetate, isopropyl isobutyryl acetate, n-butyl isobutyryl acetate, isobutyl isobutyryl acetate, sec-butyl isobutyryl acetate, tert-butyl isobutyryl acetate, n-pentyl isobutyryl acetate, n-hexyl isobutyryl acetate, 2-ethylhexyl isobutyryl acetate, phenyl isobutyryl acetate, and benzyl isobutyryl acetate, etc.; and any combination the aforementioned.

The active methylene-based blocking agent is preferably at least one compound selected from the group consisting of dimethyl malonate, diethyl malonate, diisopropyl malonate, methyl acetoacetate, ethyl acetoacetate, methyl isobutyrylacetate, and ethyl isobutyrylacetate, from the viewpoint of the smoothness and image sharpness of the coating film to be formed by the aqueous coating composition of the present invention.

The blocking reaction of the isocyanate group in the polyisocyanate compound (b1) may contain a reaction catalyst as desired. Examples of the reaction catalyst include basic compounds such as metal hydroxides, metal alkoxides, metal carboxylates, metal acetylacetates, hydroxides of onium salts, onium carboxylates, metal salts of active methylene compounds, onium salts of active methylene compounds, aminosilanes, amines, and phosphines, etc.

From the viewpoint of the low-temperature curing property of the aqueous coating composition of the present invention and the water resistance of the coating film to be formed, it is preferable that the blocked polyisocyanate compound (B1) contains a structure derived from a spacer (b3) having at least two isocyanate-reactive functional groups.

Spacer (b3)

The spacer (b3) is a compound having at least two isocyanate-reactive functional groups.

The functional groups are not particularly limited as long as they are functional groups that are reactive to isocyanate groups. Examples of the isocyanate-reactive functional groups include hydroxyl groups, amino groups, carboxyl groups, and thiol groups, etc., among which hydroxyl groups and amino groups are preferable, and hydroxyl groups are particularly preferable. Therefore, it is preferable that the spacer (b3) is a compound having at least two hydroxyl groups or a compound having at least two amino groups, and among which a compound having at least two hydroxyl groups is preferable.

Examples of the compounds having at least two hydroxyl groups include, for example, as those with a low molecular weight, dihydric alcohols, such as ethylene glycol, diethylene glycol, propylene glycol, butylene glycol, and hexamethylene glycol, etc., and trihydric alcohols, such as trimethylolpropane, glycerin, and pentaerythritol, and as those with a high molecular weight, polyether polyols, polyester polyols, acrylic polyols, and epoxy polyols, etc. Among the aforementioned, polyether polyols are preferable from the viewpoint of the water resistance, etc., of the resulting coating film.

The above-mentioned polyether polyols may be commercially available products. Examples of the commercially available products include "PEG#200", "PEG#300", "PEG#400", "PEG#600", "PEG#1000", "PEG#1500", "PEG#1540", "PEG#2000", "PEG#4000", and "PEG#6000" (all manufactured by NOF CORPORATION, polyethylene glycols), "SANNIX GP250", "SANNIX GP400", "SANNIX GP600", "SANNIX GP1000", "SANNIX GP1500", "SANNIX GP3000", and "SANNIX GP4000" (all manufactured by Sanyo Chemical Industries, Ltd., polyoxypropylene glyceryl ether), "SANIX PP200", "SANIX PP400", "SANIX PP600", "SANIX PP950", "SANIX PP1000", "SANIX PP1200", "SANIX PP2000", "SANIX PP3000", "SANIX PP4000" (all manufactured by Sanyo Chemical Industries, Ltd., polyoxypropylene glycol), "PTMG250", "PTMG650", "PTMG1000", "PTMG2000", "PTMG3000", "PTMG4000" (all manufactured by Mitsubishi Chemical Corporation, polyoxytetramethylene glycol), etc.

Furthermore, examples of the compound having at least two amino groups include polyetheramines.

The above-mentioned polyetheramines may be commercially available products. Examples of the commercially available products include "JEFFAMINE D-400", "JEFFAMINE D-2000", "JEFFAMINE D-4000", "JEFFAMINE ED-600", "JEFFAMINE ED-900", "JEFFAMINE ED-2003", "ELASTAMINE RT-1000", "JEFFAMINE T-403", "JEFFAMINE T-3000", and "JEFFAMINE T-5000", etc., manufactured by HUNTSMAN.

The molecular weight of the above-mentioned spacer (b3) is preferably within the range of 500 to 6,000, more preferably within the range of 800 to 5,000, and even more preferably within the range of 1,000 to 4,000, from the viewpoint of the low-temperature curing property, etc., of the aqueous coating composition of the present invention.

The number of functional groups of the above-mentioned spacer (b3) is preferably 2 to 3, and even more preferably 2, from the viewpoint of the storage stability, etc., of the aqueous coating composition of the present invention.

A polyisocyanate compound (b1) containing a structure derived from the spacer (b3) may be formed by reacting a portion of the isocyanate groups in the polyisocyanate compound (b1) with the spacer (b3). In this case, from the viewpoints of storage stability of the aqueous coating composition of the present invention and water resistance, etc., of the coating film to be formed, the ratio of polyisocyanate compound (b1) to the spacer (b3) is preferably such that the number of moles of active hydrogen in the spacer (b3) is within the range of 0.03 to 0.6 moles, based on one mole of isocyanate group in the polyisocyanate compound (b1). Blocking the polyisocyanate compound (b1) containing a structure derived from the spacer (b3) can form the blocked polyisocyanate compound (B1) containing a structure derived from the spacer (b3).

In addition, from the viewpoint of the storage stability of the aqueous coating composition of the present invention, the blocked polyisocyanate compound (B1) may contain a structure derived from a hydrophilic group-containing compound (b4) having one isocyanate-reactive functional group.

Hydrophilic group-containing compound (b4)

The hydrophilic group-containing compound (b4) has one isocyanate-reactive functional group. Examples of the hydrophilic group-containing compound (b4) include nonionic hydrophilic group-containing compounds, anionic hydrophilic group-containing compounds, and cationic hydrophilic group-containing compounds, as well as any combinations thereof. As the hydrophilic group-containing compound (b4), a nonionic hydrophilic group-containing compound is preferable because the reaction of blocking the isocyanate group in the polyisocyanate compound (b1) by the blocking agent (b2) described above is less likely to be inhibited.

The nonionic hydrophilic group-containing compound may, for example, be a compound having a polyoxyalkylene group. Examples of the polyoxyalkylene group include a polyoxyethylene group, a polyoxypropylene group, a polyoxyethyleneoxypropylene group, etc. The nonionic hydrophilic group-containing compound preferably has a polyoxyethylene group from the viewpoint of storage stability of the aqueous coating composition of the present invention.

From the viewpoint of the storage stability of the aqueous coating composition of the present invention and the water resistance of the coating film to be formed, the compound having the polyoxyethylene group preferably has 3 or more, preferably 5 to 100, more preferably 8 to 45 consecutive polyoxyethylene groups, i.e., polyoxyethylene blocks.

Furthermore, the compound having the polyoxyethylene group may contain an oxyalkylene group other than the above-mentioned oxyethylene group in addition to the polyoxyethylene block. Examples of the oxyalkylene group other than the above-mentioned oxyethylene group include an oxypropylene group, an oxybutylene group, and an oxystyrene group.

From the viewpoint of the storage stability of the aqueous coating composition of the present invention, the molar ratio of the oxyethylene group in the oxyalkylene group in the compound having the polyoxyethylene group is preferably within the range of 20 to 100 mol%, and more preferably within the range of 50 to 100 mol%. When the molar ratio of oxyethylene groups in the oxyalkylene groups is 20 mol % or more, sufficient hydrophilicity is imparted, and the storage stability of the aqueous coating composition of the present invention is preferable.

Furthermore, from the viewpoint of the storage stability of the aqueous coating composition of the present invention and the water resistance of the coating film to be formed, it is preferable that the number average molecular weight of the nonionic hydrophilic group-containing compound is within the range of 200 to 2,000. From the viewpoint of the storage stability of the aqueous coating composition of the present invention, the number average molecular weight is more preferably 300 or more, and even more preferably 400 or more. From the viewpoint of the water resistance of the coating film to be formed by the aqueous coating composition of the present invention, the number average molecular weight is more preferably 1,500 or less, and even more preferably 1,200 or less.

The nonionic hydrophilic group-containing compound may, for example, be polyethylene glycol monoalkyl ethers (also known as $\omega$-alkoxypolyoxyethylenes), such as polyethylene glycol monomethyl ether and polyethylene glycol monoethyl ether, etc.; polypropylene glycol monoalkyl ethers (also known as $\omega$-alkoxypolyoxypropylenes), such as polypropylene glycol monomethyl ether and polypropylene glycol monoethyl ether, etc.; $\omega$-alkoxypolyoxyethylenes (oxypropylenes) such as $\omega$-methoxypolyoxyethylene (oxypropylene) and $\omega$-ethoxypolyoxyethylene (oxypropylene), etc.; polyethylene glycol (propylene glycol) monoalkyl ethers such as polyethylene glycol (propylene glycol) monomethyl ether and polyethylene glycol (propylene glycol) monoethyl ether, etc., and any combination of the aforementioned.

The nonionic hydrophilic group-containing compound is preferably polyethylene glycol monomethyl ether or polyethylene glycol monoethyl ether, and more preferably polyethylene glycol monomethyl ether.

Incidentally, in the present description, "polyethylene glycol (propylene glycol)" means a copolymer of ethylene glycol and propylene glycol, and includes block copolymers and random copolymers.

Furthermore, commercially available examples of the above-mentioned polyethylene glycol monomethyl ether include for example, "UNIOX M-400", "UNIOX M-550", "UNIOX M-1000", and "UNIOX M-2000", etc., manufactured by NOF CORPORATION.

By reacting a portion of the isocyanate groups in the polyisocyanate compound (b1) with the hydrophilic group-containing compound (b4), a polyisocyanate compound (b1) containing a structure derived from the hydrophilic group-containing compound (b4) can be formed. In this case, from the viewpoint of the storage stability of the aqueous coating composition of the present invention and the finishing property, etc., of the coating film to be formed, the ratio of the polyisocyanate compound (b1) to the hydrophilic group-containing compound (b4) is preferably such that the number of moles of active hydrogen in the hydrophilic group-containing compound (b4) is within the range of 0.03 to 0.6 moles based on one mole of isocyanate group in the polyisocyanate compound (b1). By blocking the polyisocyanate compound (b1) containing a structure derived from the hydrophilic group-containing compound (b4), a blocked polyisocyanate compound (B 1) containing a structure derived from the hydrophilic group-containing compound (b4) can be formed.

In a case where the isocyanate groups in the polyisocyanate compound (b1) and the blocking agent (b2) are reacted with the spacer (b3) and/ or the hydrophilic group-containing compound (b4), the order of the reaction is not particularly limited.

Specifically, a method in which a portion of the isocyanate groups in the polyisocyanate compound (b1) is reacted with the spacer (b3) and/ or the hydrophilic group-containing compound (b4) and then the remaining isocyanate groups are blocked with the blocking agent (b2), a method in which a portion of the isocyanate groups in the polyisocyanate compound (b1) is blocked with the blocking agent (b2) and then the remaining isocyanate groups are reacted with the spacer (b3) and/ or the hydrophilic group-containing compound (b4), and a method in which the isocyanate groups in the polyisocyanate compound (b1) are simultaneously reacted with the blocking agent (b2), the spacer (b3) and/ or the hydrophilic group-containing compound (b4), etc., may be mentioned.

The weight average molecular weight of the blocked polyisocyanate compound (B1) is preferably within the range of 20,000 to 200,000, more preferably within the range of 25,000 to 150,000, and even more preferably within the range of 30,000 to 120,000, from the viewpoints of production stability and the water resistance, etc., of the coating film to be formed.

The content of the blocked polyisocyanate compound (B1) is preferably 2 to 70 mass %, more preferably 5 to 50 mass %, and even more preferably 10 to 40 mass %, based on the amount of resin solid content in the aqueous coating composition.

Melamine resin (B2)

As the melamine resin (B2), a partially methylolated melamine resin or a fully methylolated melamine resin obtained by the reaction of a melamine component with an aldehyde component can be used. Examples of the aldehyde component include formaldehyde, paraformaldehyde, acetaldehyde, and benzaldehyde, etc.

Furthermore, those in which the methylol groups of the above-mentioned methylolated melamine resins are partially or completely etherified with an appropriate alcohol may also be used. Examples of the alcohols used for the etherification include methyl alcohol, ethyl alcohol, n-propyl alcohol, i-propyl alcohol, n-butyl alcohol, i-butyl alcohol, 2-ethyl-1-butanol, and 2-ethyl-1-hexanol, etc.

As the melamine resin (B2), methyl etherified melamine resins in which the methylol groups of partially or fully methylolated melamine resins have been partially or completely etherified with methyl alcohol, butyl etherified melamine resins in which the methylol groups of partially or fully methylolated melamine resins have been partially or completely etherified with butyl alcohol, and methyl-butyl mixed etherified melamine resins in which the methylol groups of partially or fully methylolated melamine resins have been partially or completely etherified with methyl alcohol and butyl alcohol are preferable, and the methyl-butyl mixed etherified melamine resins are more preferable.

The melamine resin (B2) preferably has a weight average molecular weight of 400 to 6,000, more preferably 500 to 4,000, and even more preferably 600 to 3,000.

As the melamine resin (B2), commercially available products may be used. Examples of the commercially available product names include "Cymel 202", "Cymel 203", "Cymel 204", "Cymel 211", "Cymel 212", "Cymel 238", "Cymel 251", "Cymel 253", "Cymel 254", "Cymel 303", "Cymel 323", "Cymel 324", "Cymel 325", "Cymel 327", "Cymel 350", "Cymel 370", "Cymel 380", "Cymel 385", "Cymel 1156", "Cymel 1158", "Cymel 1116", "Cymel 1130" (all manufactured by Allnex Japan Inc.); "Resimin 735", "Resimin 740", "Resimin 741", "Resimin 745", "Resimin 746", and "Resimin 747" (all manufactured by Monsanto Company); "U-Ban 120", "U-Ban 20HS", "U-Ban 20SE, "U-Ban 2021", "U-Ban 2028", "U-Ban 28-60" (all manufactured by Mitsui Chemicals, Inc.); "Sumimal M55", "Sumimal M30W", and "Sumimal M50W" (all manufactured by SUMITOMO CHEMICAL COMPANY, LIMITED); etc.

In a case where the aqueous coating composition of the present invention contains the above-mentioned melamine resin (B2), the content of the melamine resin (B2) is preferably 2 to 40 mass %, more preferably 3 to 30 mass %, and even more preferably 5 to 20 mass %, based on the amount of resin solid content in the aqueous coating composition.

Glitter pigment (C)

Examples of the glitter pigment (C) include aluminum pigments, vapor-deposited metal flake pigments, and optical interference pigments, etc. One type or two or more types of these pigments may be appropriately selected and used. Among the aforementioned, from the viewpoint of forming a coating film with an excellent glittering appearance, it is preferable to contain aluminum pigments and/ or vapor-deposited metal flake pigments, and it is even more preferable to contain aluminum pigments.

The above-mentioned aluminum pigments are generally produced by pulverizing and grinding aluminum in a ball mill or attritor mill in the presence of a grinding medium using a grinding aid. The grinding aids used in the manufacturing process of the aluminum flake pigment include higher fatty acids such as oleic acid, stearic acid, isostearic acid, lauric acid, palmitic acid, and myristic acid, etc., as well as aliphatic amines, aliphatic amides, and aliphatic alcohols. Aliphatic-based hydrocarbons such as mineral spirits are used as the grinding medium. Furthermore, the above-mentioned aluminum pigment may be a colored aluminum pigment in which the surface of the aluminum pigment is coated with a colored pigment and then further coated with a resin, or the surface of the aluminum pigment is coated with a metal oxide such as iron oxide, etc.

The above-mentioned aluminum pigment preferably has an average particle size within the range of 1 to 100 $\mu$m, more preferably 5 to 50 $\mu$m, and particularly preferably 7 to 30 $\mu$m. The thickness is preferably within the range of 0.01 to 2.0 $\mu$m, and particularly preferably 0.02 to 1.0 $\mu$m.

In a case where the aqueous coating composition of the present invention contains an aluminum pigment as the glitter pigment (C), the content is preferably within the range of 0.1 to 50 parts by mass, and more preferably 1 to 30 parts by mass, based on 100 parts by mass of the resin solid content in the aqueous coating composition of the present invention, from the viewpoint of forming a coating film with excellent finished appearance and glittering appearance.

The vapor-deposited metal flake pigment is obtained by vapor-depositing a metal film on a base substrate, peeling off the base substrate, and then pulverizing the vapor-deposited metal film. The base substrate may be, for example, a film, etc.

The above-mentioned metal material is not particularly limited, however, examples thereof include aluminum, gold, silver, copper, brass, titanium, chromium, nickel, nickel chromium, and stainless steel, etc. Among the aforementioned, aluminum or chromium is particularly preferable from the viewpoints of availability and ease of handling. In the present description, a vapor-deposited metal flake pigment obtained by vapor-depositing aluminum is referred to as a "vapor-deposited aluminum flake pigment", and a vapor-deposited metal flake pigment obtained by vapor-depositing chromium is referred to as a "vapor-deposited chromium flake pigment".

In the present description, the above-mentioned "vapor-deposited aluminum flake pigment" is not an aluminum pigment, however is included in the vapor-deposited metal flake pigment.

As the vapor-deposited metal flake pigment, one formed from a single layer of vapor-deposited metal film may be used, however, a multi-layer type in which another metal or metal oxide is further formed on the vapor-deposited metal film may also be used.

It is preferable that the surface of the vapor-deposited aluminum flake pigment is silica-treated from the viewpoints of storage stability and obtaining a coating film with excellent metallic luster, etc.

Commercially available products that may be used as the vapor-deposited aluminum flake pigment include, for example, the "METALURE" series (product name, manufactured by ECKART GmbH), the "Hydroshin WS" series (product name, manufactured by ECKART GmbH), the "Decomet" series (product name, manufactured by SCHLENK SE), and the "Metasheen" series (product name, manufactured by BASF), etc.

Commercially available products that may be used as the vapor-deposited chromium flake pigment include, for example, the "Metalure Liquid Black" series (product name, manufactured by ECKART GmbH), etc.

The average thickness of the vapor-deposited metal flake pigment is preferably 0.01 to 1.0 $\mu$m, and more preferably 0.015 to 0.1 $\mu$m.

The average particle size of the vapor-deposited metal flake pigment is preferably 1 to 50 $\mu$m, more preferably 5 to 20 $\mu$m.

In a case where the aqueous coating composition of the present invention contains a vapor-deposited metal flake pigment as the glitter pigment (C), the content thereof is preferably within the range of 0.1 to 30 parts by mass, and more preferably within the range of 1 to 15 parts by mass, based on 100 parts by mass of the resin solid content in the aqueous coating composition of the present invention, from the viewpoint of forming a coating film with excellent finished appearance and glittering appearance.

The optical interference pigment includes a glitter pigment in which the surface of a transparent or semi-transparent scaly base material such as natural mica, artificial mica, glass, silica, iron oxide, aluminum oxide, or other metal oxides, etc., is coated with a metal oxide having a refractive index different from that of the base material. The optical interference pigment may be used alone or in combination of two types or more.

Natural mica is a scaly base material made by pulverizing mica ore. Artificial mica is synthesized by heating industrial raw materials such as $SiO_2$, $MgO$, $Al_2O_3$, $K_2SiF_6$, and $Na_2SiF_6$, melting the same at a high temperature of approximately 1500°C, and then cooling and crystallizing the same, and compared to natural mica, it has fewer impurities and is uniform in size and thickness. Specific examples of artificial mica base materials include fluorine phlogopite ($KMg_3AlSi_3O_{10}F_2$), potassium tetrasilicic mica ($KMg_{2.5}AlSi_4O_{10}F_2$), sodium tetrasilicic mica ($NaMg_{2.5}AlSi_4O_{10}F_2$), Na taeniolite ($NaMg_2LiSi_4O_{10}F_2$), and LiNa taeniolite ($LiMg_2LiSi_4O_{10}F_2$), etc.

Metal oxides that coat the base material include titanium oxide and iron oxide, and the optical interference pigment may exhibit a variety of different interference colors depending on the thickness of the metal oxide.

Specific examples of the optical interference pigments include the metal oxide-coated mica pigment, metal oxide-coated alumina flake pigment, metal oxide-coated glass flake pigment, and metal oxide-coated silica flake pigment, etc., as shown below.

The metal oxide-coated mica pigments are pigments that use natural mica or artificial mica as a base material and the surface of the base material is coated with a metal oxide.

The metal oxide-coated alumina flake pigments are pigments that use alumina flakes as a base material and the surface of the base material is coated with a metal oxide. Alumina flakes refer to scaly (thin) aluminum oxide, and are colorless and transparent. The alumina flakes do not need to have a single component of aluminum oxide, and may contain oxides of other metals.

The metal oxide-coated glass flake pigments are pigments that use scaly glass as a base material and the surface of the base material is coated with a metal oxide. The metal oxide-coated glass flake pigment has a smooth surface, and therefore has strong light reflection.

The metal oxide-coated silica flake pigments are pigments in which a scaly silica base material with a smooth surface and uniform thickness is coated with a metal oxide.

In a case where the aqueous coating composition of the present invention contains an optical interference pigment as the glitter pigment (C), the content is preferably within the range of 0.1 to 30 parts by mass, and more preferably within the range of 1 to 25 parts by mass, based on 100 parts by mass of the resin solid content in the aqueous coating composition of the present invention, from the viewpoint of forming a coating film with excellent finished appearance and glittering appearance.

Furthermore, the total content of the glitter pigments (C) is preferably within the range of 0.1 to 60 parts by mass, and more preferably within the range of 1 to 30 parts by mass, based on 100 parts by mass of the resin solid content in the aqueous coating composition of the present invention, from the viewpoint of forming a coating film with excellent finished and glittering appearances.

Cellulose nanofiber (D)

The cellulose nanofiber (D) has a carboxyl group content of 0.80 to 1.10 mmol/g with respect to the absolutely dry mass of cellulose nanofiber, and an average aspect ratio of 20 or more and less than 50.

The above-mentioned cellulose nanofiber (D) is also referred to as cellulose nanofibril, fibrillated cellulose, or nanocellulose crystal.

The cellulose nanofiber (D) of the present invention is an oxidized cellulose nanofiber (hereinafter sometimes referred to as "oxidized CNF") that may be obtained by defibrating oxidized cellulose obtained by introducing carboxyl groups into a cellulose raw material. Furthermore, the cellulose nanofiber (D) has a carboxyl group content of 0.80 to 1.10 mmol/g, more preferably 0.85 to 1.10 mmol/g, and even more preferably 0.90 to 1.10 mmol/g, with respect to the absolutely dry mass of the cellulose nanofiber, and an average aspect ratio of 20 or more and less than 50.

(Raw material)

The cellulose raw materials include, for example, plant materials (e.g., wood, bamboo, hemp, jute, kenaf, agricultural waste, cloth, pulp (softwood unbleached kraft pulp (NUKP), softwood bleached kraft pulp (NBKP), hardwood unbleached kraft pulp (LUKP), hardwood bleached kraft pulp (LBKP), softwood unbleached sulfite pulp (NUSP), softwood bleached sulfite pulp (NBSP), thermomechanical pulp (TMP), recycled pulp, waste paper, etc.), animal materials (e.g., ascidians), algae, microorganisms (e.g., acetic acid bacteria (Acetobacter)), and those originating from microbial products, and any of the aforementioned may be used. The cellulose raw materials derived from plants or microorganisms are preferable, and the cellulose raw materials derived from plants are more preferable.

(Introduction of Carboxyl groups)

The carboxyl groups may be introduced into the cellulose raw material by oxidizing (carboxylating) the above-mentioned cellulose raw material using a known method.

One example of oxidation is a method in which the cellulose raw material is oxidized in water using an oxidizing agent in the presence of an N-oxyl compound and a bromide, iodide, or a mixture thereof. This oxidation reaction selectively oxidizes the primary hydroxyl group at the C6 position of the pyranose ring on the cellulose surface. As a result, oxidized cellulose having aldehyde groups and carboxyl groups (-COOH) or carboxylate groups (-COO-) on the surface can be obtained. The concentration of cellulose during the reaction is not particularly limited, however, is preferably 5 mass % or less.

The term "N-oxyl compound" refers to a compound capable of generating nitroxy radicals. Any compound that can promote the desired oxidation reaction can be used as the N-oxyl compound. Examples include 2,2,6,6-tetramethylpiperidine-1-oxy radical (TEMPO) and the derivatives thereof (e.g., 4-hydroxyTEMPO).

The amount of the N-oxyl compound used is not particularly limited, as long as it is a catalytic amount capable of oxidizing the raw cellulose. For 1 g of absolutely dry cellulose, 0.01 mmol to 10 mmol is preferable, 0.01 mmol to 1 mmol is more preferable, and 0.05 mmol to 0.5 mmol is even more preferable. The concentration of the compound in the reaction system is preferably approximately 0.1 mmol/ L to 4 mmol/ L.

The term "bromide" refers to a compound containing bromine, and includes alkali metal bromides that can dissociate and ionize in water. Furthermore, iodides are compounds containing iodine, including alkali metal iodides.

The amount of bromide or iodide used may be selected within a range that can promote the oxidation reaction. The total amount of bromide and iodide is preferably 0.1 mmol to 100 mmol, more preferably 0.1 mmol to 10 mmol, and even more preferably 0.5 mmol to 5 mmol, with respect to 1 g of absolutely dry cellulose.

A known oxidizing agent may be used, such as halogen, a halous acid, a hypohalogenous acid, perhalogen acid or the salts, halogen oxides, and peroxides, etc., of the aforementioned. Among the aforementioned, sodium hypochlorite, which is inexpensive and has a low environmental impact, is preferable.

The amount of the oxidizing agent used is preferably 0.5 mmol to 500 mmol, more preferably 0.5 mmol to 50 mmol, and even more preferably 1 mmol to 25 mmol, with respect to 1 g of absolutely dry cellulose. Furthermore, for example, 1 mol to 40 mol is preferable with respect to 1 mol of N-oxyl compound.

The oxidation process of cellulose may proceed efficiently even under relatively mild conditions. Therefore, the reaction temperature is preferably 4°C to 40°C, and may be a room temperature of approximately 15°C to 30°C. Since the carboxyl groups are generated in the cellulose as the reaction proceeds, the pH of the reaction solution decreases. In order to proceed efficiently with the oxidation reaction, it is preferable to add an alkaline solution such as a sodium hydroxide solution during the reaction to maintain the pH of the reaction solution at 8 to 12, preferably approximately 9 to 12, and more preferably approximately 10 to 12. The reaction medium is preferably water, because it is easy to handle and side reactions are unlikely to occur.

The reaction time in the oxidation reaction may be set appropriately according to the degree of oxidation progress, and is usually 0.5 to 6 hours.

The oxidation reaction may also be carried out in two stages. For example, the carboxylated cellulose obtained by being filtered after the first-stage reaction is oxidized again under the same or different reaction conditions, and may be efficiently oxidized without being inhibited by the salt by-product generated in the first-stage reaction.

Another example is a method of oxidizing the cellulose raw material by contacting the same with an ozone-containing gas. This oxidation reaction oxidizes at least the hydroxyl groups at the 2- and 6-positions of the pyranose ring, and decomposes the cellulose chain.

The ozone concentration in the ozone-containing gas is preferably 50 g/ m$^3$ to 250 g/ m$^3$, and more preferably 50 g/ m$^3$ to 220 g/ m$^3$. The amount of ozone added to the cellulose raw material is preferably 0.1 parts by mass to 30 parts by mass, and more preferably 5 parts by mass to 30 parts by mass, when the solid content of the cellulose raw material is regarded as 100 parts by mass.

The ozone treatment temperature is preferably 0°C to 50°C, more preferably 20°C to 50°C. The ozone treatment time is not particularly limited, however, is preferably approximately 1 minute to 360 minutes, more preferably approximately 30 minutes to 360 minutes. When the ozone treatment conditions are within these ranges, excessive oxidation and decomposition of cellulose can be prevented, and the yield of oxidized cellulose will be preferable.

After the ozone treatment, an additional oxidation treatment may be performed using an oxidizing agent. The oxidizing agent used in the additional oxidation treatment is not particularly limited, however, examples include chlorine based compounds such as chlorine dioxide and sodium chlorite, etc., oxygen, hydrogen peroxide, persulfuric acid, and peracetic acid, etc. For example, these oxidizing agents may be dissolved in a polar organic solvent such as water or alcohol, etc., to prepare an oxidizing agent solution, and the cellulose raw material may be immersed in the solution to perform the additional oxidation treatment.

The amount of carboxyl groups, which indicates the degree of modification of the oxidized cellulose, may be adjusted by controlling the reaction conditions such as the amount of oxidizing agent added and the reaction time, etc., described above. Incidentally, the amount of carboxyl groups is 0.80 to 1.10 mmol/g, more preferably 0.85 to 1.10 mmol/g, and even more preferably approximately 0.90 to 1.10 mmol/g, based on the absolutely dry mass of the oxidized cellulose. When it the amount of carboxyl groups less than 0.8 mmol/g, a large amount of energy is required to defibrate the same into oxidized CNF. Furthermore, when the oxidized cellulose with the amount of carboxyl groups exceeding 1.1 mmol/g is used as a raw material, the physical properties of the resulting coating material containing the oxidized CNF will decrease. Incidentally, in the present description, when the degree of modification is indicated, the amount of carboxyl groups refers to the total amount of carboxyl groups (-COOH) and carboxylate groups (-COO-).

The amount of carboxyl groups, etc., may be calculated using the following formula from the amount of sodium hydroxide (a) consumed in the neutralization stage of weak acid, where the change in electrical conductivity is gradual, by preparing 60 ml of a 0.5 mass % slurry of oxidized pulp, adding 0.1 M hydrochloric acid solution to adjust the pH to 2.5, and then dropping therein 0.05 N sodium hydroxide solution and measuring the electrical conductivity until the pH reaches 11.

$$\text{The carboxyl group content [mmol/ g pulp]} = a \text{ [ml]} \times 0.05/ \text{ the mass of oxidized pulp [g]}$$

Incidentally, in principle, since the degree of modification does not change during the defibration treatment described below, the degree of modification of the oxidized cellulose can be considered as the degree of modification of the defibrated cellulose nanofiber.

(Defibrillation)

The device used for defibration is not particularly limited, however, examples include high-speed rotation, colloid mill, high-pressure, roll mill, and ultrasonic devices, etc., and high-pressure or ultra-high-pressure homogenizers are preferable, and wet high-pressure or ultra-high-pressure homogenizers are more preferable. The device is preferably capable of applying strong shear force to the cellulose raw material or oxidized cellulose (usually a dispersion liquid). The pressure that the device can apply is preferably 50 MPa or more, more preferably 100 MPa or more, and even more preferably 140 MPa or more. The device is preferably a wet high-pressure or ultra-high-pressure homogenizer that can apply the above-mentioned pressure to the cellulose raw material or oxidized cellulose (usually a dispersion liquid) and can also apply a strong shear force. This allows for efficient defibration. The number of treatments (passes) through the defibration device may be one or two or more times, and two or more times are more preferable.

In the dispersion treatment, the oxidized cellulose is usually dispersed in a solvent. The solvent is not particularly limited as long as the same can disperse oxidized cellulose, however, examples include water, organic solvents (e.g., hydrophilic organic solvents such as methanol, etc.), and mixed solvents thereof. Since the cellulose raw material is hydrophilic, the solvent is preferably water.

The solid content concentration of the oxidized cellulose in the dispersion is usually 0.1 mass % or more, preferably 0.2 mass % or more, and more preferably 0.3 mass % or more. This allows the amount of liquid to be appropriate with respect to the amount of cellulose fiber raw material, which is efficient. The upper limit is usually 10 mass % or less, preferably 6 mass % or less. This allows fluidity to be maintained.

The order of the defibration treatment and dispersion treatment is not particularly limited, and either may be performed first or simultaneously, however, it is preferable to perform the defibration treatment after the dispersion treatment. Each combination of treatments needs to be performed at least once, and may be repeated two or more times.

Prior to the defibration treatment or dispersion treatment, a preliminary treatment may be performed as necessary. The preliminary treatment may be performed using a mixing, stirring, emulsifying, and dispersing device such as a high-speed shear mixer.

The average fiber diameter of the cellulose nanofiber (D) of the present invention is preferably 3 nm or more. Furthermore, the average fiber diameter of the cellulose nanofiber (D) of the present invention is preferably 500 nm or less, more preferably 50 nm or less, and even more preferably 20 nm or less. Furthermore, the average fiber length of the cellulose nanofiber (D) of the present invention is preferably 60 nm or more, more preferably 75 nm or more, and even more preferably 90 nm or more. Furthermore, the average fiber length of the cellulose nanofiber (D) of the present invention is preferably less than 25 $\mu$m, more preferably less than 2250 nm, and even more preferably less than 900 nm. The average fiber diameter and average fiber length of the cellulose nanofiber may be measured, for example, by preparing a 0.001 mass% aqueous dispersion of cellulose nanofiber (D), spreading this diluted dispersion thinly on a sample stage made of mica, and drying and heating the same at 50°C to prepare an observation sample, and measuring the cross-sectional height or length of five shape images observed with an atomic force microscope (AFM), thereby calculating the number average fiber diameter or fiber length.

Furthermore, the average aspect ratio of the cellulose nanofiber (D) is 20 or more and less than 50. The average aspect ratio of the cellulose nanofiber (D) is preferably within the range of 25 to 45, and more preferably within the range of 30 to 45. The average aspect ratio can be calculated by the following formula:

$$\text{The average aspect ratio} = \text{The average fiber length} / \text{The average fiber diameter}$$

T

From the viewpoint of forming a coating film with excellent finished appearance and glittering appearance, the content of the cellulose nanofiber (D) in the aqueous coating composition of the present invention is preferably within the range of 0.1 to 15.0 parts by mass, and more preferably within the range of 1.0 to 10.0 parts by mass, based on 100 parts by mass of the resin solid content in the aqueous coating composition of the present invention.

Other components

The aqueous coating composition of the present invention may further contain, as necessary, resins other than those mentioned above, pigments other than the glitter pigment (C), organic solvents, curing catalysts, dispersants, anti-settling agents, defoamers, thickeners, UV absorbers, light stabilizers, surface conditioners, etc.

Examples of the resins other than those mentioned above include acrylic resins that do not contain hydroxyl groups, polyester resins that do not contain hydroxyl groups, polyurethane resins that do not contain hydroxyl groups, polyether resins that do not contain hydroxyl groups, polycarbonate resins that do not contain hydroxyl groups, and epoxy resins that do not contain hydroxyl groups, etc., and among the aforementioned, it is preferable to use polyurethane resins that do not contain hydroxyl groups.

The polyurethane resins that do not contain hydroxyl groups may be obtained by reacting, for example, polyols with polyisocyanates in a conventional manner. Furthermore, after the reaction, the chains can be extended in the presence of a chain extender, which is a low molecular weight compound having at least two active hydrogens in one molecule, such as diols and diamines, etc. The resin may be modified with an acrylic resin or the like during or after preparation.

The above-mentioned polyol, polyisocyanate and the chain extender may be the compounds described in the description of the hydroxyl group-containing polyurethane resin (A3).

The pigments other than the glitter pigment (C) may include, for example, color pigments and extender pigments, etc. These pigments may be used alone or in combination of two types or more.

In a case where the aqueous coating composition of the present invention contains a pigment other than the glitter pigment (C), the content of the pigment other than the glitter pigment (C) is preferably within the range of 1 to 200 parts by mass, preferably 5 to 160 parts by mass, and more preferably 15 to 140 parts by mass, based on 100 parts by mass of the resin solid content in the aqueous coating composition of the present invention.

Examples of the color pigment include titanium oxide, zinc oxide, carbon black, molybdenum red, Prussian blue, cobalt blue, azo pigments, phthalocyanine-based pigments, quinacridone- based pigments, isoindoline-based pigments, threne-based pigments, perylene-based pigments, dioxazine-based pigments, diketopyrrolopyrrole-based pigments, etc.

In a case where the aqueous coating composition of the present invention contains the above-mentioned color pigment, the content of the color pigment is preferably within the range of 1 to 180 parts by mass, preferably 5 to 150 parts by mass, and more preferably 15 to 130 parts by mass, based on 100 parts by mass of the resin solid content in the aqueous coating composition of the present invention.

Examples of the extender pigment include barium sulfate, talc, clay, kaolin, barium carbonate, calcium carbonate, silica, alumina white, etc. As the extender pigment, barium sulfate may be preferably used from the viewpoint of improving design, etc.

In a case where the aqueous coating composition of the present invention contains the above-mentioned extender pigment, the content of the extender pigment is preferably within the range of 1 to 180 parts by mass, preferably 5 to 140 parts by mass, and more preferably 10 to 120 parts by mass, based on 100 parts by mass of the resin solid content in the aqueous coating composition of the present invention.

Examples of the organic solvent include ketone-based solvents such as acetone, methyl ethyl ketone, and methyl isobutyl ketone, etc.; ester-based solvents such as ethyl acetate, butyl acetate, methyl benzoate, ethyl ethoxypropionate, ethyl propionate, and methyl propionate, etc.; alcohol-based solvents such as isopropanol, n-butanol, isobutanol, and 2-ethylhexanol, etc.; ether-based solvents such as tetrahydrofuran, dioxane, and dimethoxyethane, etc.; glycol ether-based solvents such as ethylene glycol monomethyl ether, ethylene glycol monoethyl ether, diethylene glycol monomethyl ether, propylene glycol monomethyl ether acetate, and 3-methoxybutyl acetate, etc.; aromatic hydrocarbon-based solvents, and aliphatic hydrocarbon-based solvents.

Specific examples of the curing catalyst include organometallic compounds such as tin octylate, dibutyltin diacetate, dibutyltin di(2-ethylhexanoate), dibutyltin dilaurate, dioctyltin diacetate, dioctyltin di(2-ethylhexanoate), dibutyltin oxide, dibutyltin sulfide, dioctyltin oxide, dibutyltin fatty acid salts, lead 2-ethylhexanoate, zinc octylate, zinc naphthenate, zinc fatty acids, bismuth octanoate, bismuth 2-ethylhexanoate, bismuth oleate, bismuth neodecanoate, bismuth versatate, bismuth naphthenate, cobalt naphthenate, calcium octylate, copper naphthenate, and tetra(2-ethylhexyl)titanate, etc.; sulfonic acid group-containing compounds such as paratoluenesulfonic acid, dodecylbenzenesulfonic acid, and dinonylnaphthalenesulfonic acid, etc.; phosphate group-containing compounds such as monobutyl phosphate, dibutyl phosphate, mono 2-ethylhexyl phosphate, di 2-ethylhexyl phosphate, alkyl ether phosphate, polyoxyethylene alkyl ether phosphate, and phosphoric acid group-containing resins, etc. Among the aforementioned, from the viewpoint of water resistance, etc., of the coating film to be formed, a phosphate group-containing compound is preferable, a phosphate group-containing resin is more preferable, and a phosphate group-containing acrylic resin is even more preferable.

The above-mentioned phosphate group-containing acrylic resin may be synthesized by copolymerizing a polymerizable unsaturated monomer having a phosphate group and another polymerizable unsaturated monomer by a conventional method.

**In** the above-mentioned phosphate group-containing acrylic resin, the polymerizable unsaturated monomer having a phosphate group is preferably 1 to 50 mass %, particularly preferably 5 to 40 mass %, based on the total amount of each monomer component constituting the phosphate group-containing acrylic resin.

From the viewpoint of the finished appearance and the coating film property, the weight average molecular weight of the phosphate group-containing acrylic resin is preferably within the range of 3,000 to 30,000, more preferably within the range of 5,000 to 25,000, and even more preferably within the range of 10,000 to 20,000.

Incidentally, in a case where the phosphate group-containing acrylic resin contains a hydroxyl group, it is deemed to be included in the hydroxyl group-containing resin (A).

**In** a case where a phosphate group-containing compound is used as a curing catalyst, the content is preferably 0.1 to 20 mass %, more preferably 0.5 to 15 mass %, and even more preferably 1 to 10 mass %, based on the amount of resin solid content in the aqueous coating composition.

The aqueous coating composition of the present invention may be used for application by diluting the same with water and/ or an organic solvent, etc., as necessary, and adjusting the viscosity to an appropriate level.

The appropriate viscosity varies depending on the coating material composition, however, when adjusted using a Ford cup viscometer No. 4, for example, the viscosity at 20°C may be usually approximately 20 to 100 seconds, preferably approximately 25 to 70 seconds.

Furthermore, in the above, the application solid content concentration of the aqueous coating composition is usually approximately 11 to 70 mass %, preferably approximately 16 to 65 mass %, and even more preferably approximately 20 to 60 mass %.

The aqueous coating composition of the present invention may be either a one-component coating material or a multi-component coating material, however, it is preferable that the same is a one-component coating material from the viewpoints of excellent productivity as there is no need for a mixing process of the coating materials and simplification of maintenance of the application machine.

The aqueous coating composition of the present invention may be applied to an object to be coated by a method known per se, such as air spray application, airless spray application, rotary atomization application, curtain coat application, etc., and electrostatic application may be performed during application. Among the aforementioned, air spray application and rotary atomization application are preferable. Such application methods may be performed once or several times until a desired film thickness is obtained.

The application amount of the aqueous coating composition of the present invention is preferably an amount that results in a cured film thickness of usually 5 to 30 $\mu$m, preferably 7 to 25 $\mu$m, and more preferably 10 to 20 $\mu$m.

Multilayer coating film forming method

The aqueous coating composition of the present invention can form a coating film with excellent finished appearance and glittering appearance, and therefore can be suitably used as a basecoat coating material composition. The present coating material may be particularly suitably used as an automotive coating material.

As a multilayer coating film forming method in which the present coating material is applied as a basecoat coating material composition, for example, the following method can be suitably used.

A multilayer coating film forming method comprising in sequence:

step (1) of applying an intermediate coating composition on an object to be coated so as to form an intermediate coating film;
step (2) of applying the aqueous coating composition of the present invention on the intermediate coating film which has been formed in the step (1) so as to form a basecoat coating film;

step (3) of applying a clear coating composition on the basecoat coating film which has been formed in the step (2) so as to form a clear coating film; and

step (4) of heating and curing, all at once, the intermediate coating film which has been formed in the step (1), the basecoat coating film which has been formed in the step (2), and the clear coating film which has been formed in the step (3).

Examples of the above-mentioned object to be coated include the outer panels of automobile bodies such as passenger cars, trucks, motorcycles, and buses; automobile parts; and the outer panels of household electrical appliances such as mobile phones and audio equipment. Among the aforementioned, the outer panels of automobile bodies and automobile parts are preferable. The material of the object to be coated is not particularly limited. Examples include metal materials such as iron, aluminum, brass, copper, tinplate, stainless steel, galvanized steel, and zinc alloy (Zn-Al, Zn-Ni, Zn-Fe, etc.), plated steel; plastic materials such as resins such as polyethylene resin, polypropylene resin, acrylonitrile-butadiene-styrene (ABS) resin, polyamide resin, acrylic resin, vinylidene chloride resin, polycarbonate resin, polyurethane resin, and epoxy resin, etc., and various FRPs; inorganic materials such as glass, cement, and concrete; wood; and fiber materials such as paper and cloth, etc. Among the aforementioned, metal materials and plastic materials are preferable.

Furthermore, the surface of the object to be coated to which the coating film is applied may be a metal surface of an automobile body exterior panel, an automobile part, a household electrical appliance, or a metal base material such as a steel plate that constitutes the aforementioned, which has been subjected to a surface treatment such as phosphate treatment, chromate treatment, or composite oxide treatment, etc.

A coating film may be further formed on an object that may or may not have been surface-treated. For example, the base material which is the object to be coated, may be surface-treated as necessary, and an undercoat coating film may be formed thereon. For example, in a case where the object to be coated is an automobile body, the above-mentioned undercoat coating film may be formed using a known coating material per se for undercoat coating that is normally used in application to an automobile body.

As the undercoat coating material for forming the undercoat coating film, for example, an electrodeposition coating material, preferably a cationic electrodeposition coating material, may be used.

The above-mentioned intermediate coating composition may be a coating material made by combining a base resin such as an acrylic resin, polyester resin, alkyd resin, urethane resin, or epoxy resin having a crosslinkable functional group such as a carboxyl group or a hydroxyl group, etc.; an amino resin such as a melamine resin or a urea resin, etc.; and a crosslinker such as a polyisocyanate compound which may be blocked, together with a pigment, a thickener, and other optional components.

The method of applying the intermediate coating composition is not particularly limited, however, a wet coating film may be formed by, for example, an application method such as air spray application, airless spray application, rotary atomization application, or curtain coat application, etc. **In** these application methods, electrostatic application may be performed as necessary. Among the aforementioned, the air spray application or rotary atomization application is particularly preferable. The application amount of the intermediate coating composition is usually an amount that results in a cured film thickness of preferably 3 to 50 μm, and more preferably 5 to 30 μm.

Furthermore, in a case where the air spray application, airless spray application, or rotary atomization application is performed, it is preferable to appropriately adjust the viscosity of the intermediate coating composition with a solvent such as water and/ or an organic solvent so that the viscosity is within a range suitable for the application, that is usually approximately 20 to 100 seconds, preferably approximately 25 to 70 seconds, at 20°C when adjusted using a Ford cup viscometer No. 4.

As the above-mentioned clear coating composition, any of the thermosetting clear coating compositions known for application to automobile bodies, etc., may be used. Examples of the thermosetting clear coating composition include an organic solvent-type thermosetting coating material composition, an aqueous thermosetting coating material composition, and a powder thermosetting coating material composition, etc., containing a base resin having a crosslinkable functional group and a curing agent.

Examples of the crosslinkable functional groups possessed by the above-mentioned base resin include carboxyl groups, hydroxyl groups, epoxy groups, and silanol groups, etc. Examples of the types of base resin include acrylic resins, polyester resins, alkyd resins, urethane resins, epoxy resins, and fluorine resins, etc. Examples of the curing agent include polyisocyanate compounds, blocked polyisocyanate compounds, melamine resins, urea resins, carboxyl group-containing compounds, carboxyl group-containing resins, epoxy group-containing resins, and epoxy group-containing compounds, etc.

Preferable combinations of the base resin/ the curing agent in the above-mentioned clear coating composition include hydroxyl group-containing resins/ polyisocyanate compounds, carboxyl group-containing resins/ epoxy group-containing resins, hydroxyl group-containing resins/ blocked polyisocyanate compounds, and hydroxyl group-containing resins/ melamine resins, etc, and the combination of hydroxyl group-containing resins/ polyisocyanate compounds are more preferable.

Furthermore, the clear coating composition may be a one-component coating material or a multi-component coating material such as a two-component urethane resin coating material, etc.

Furthermore, the above-mentioned clear coating composition may contain color pigments, glitter pigments, dyes, etc., to the extent that transparency is not impaired, and may further contain extender pigments, ultraviolet absorbers, light stabilizers, defoamers, thickeners, rust inhibitors, surface conditioners, etc., as appropriate.

The application method of the clear coating composition is not particularly limited, however, a wet coating film may be formed by, for example, air spray application, airless spray application, rotary atomization application, curtain coat application, etc. In these application methods, electrostatic application may be performed as necessary. Among the aforementioned, the air spray application or rotary atomization application is particularly preferable. The application amount of the clear coating composition is usually an amount that results in a cured film thickness of preferably 10 to 70 $\mu$m, and more preferably 20 to 50 $\mu$m.

Furthermore, in a case where the air spray application, airless spray application, or rotary atomization application is performed, it is preferable to appropriately adjust the viscosity of the clear coating composition with a solvent such as an organic solvent, etc., so that the viscosity is within a range suitable for the application, that is usually approximately 15 to 60 seconds, preferably approximately 20 to 50 seconds, at 20°C when adjusted using a Ford cup viscometer No. 4.

The above-mentioned heating may be performed by known means, and for example, a drying oven such as a hot air oven, an electric oven, or an infrared induction heating oven, etc., may be used. The heating temperature is within a range of 60 to 160°C, and preferably 70 to 140°C. The heating time is not particularly limited, however, is preferably within a range of 10 to 40 minutes, and more preferably 20 to 40 minutes.

EXAMPLES

Hereinbelow, the present invention will be explained in more detail below with reference to the following production examples, examples, and comparative examples. Incidentally, these production examples, examples, and comparative examples are merely illustrative and are not intended to limit the scope of the present invention. In the production examples, examples, and comparative examples, "parts" and "%" are based on mass unless otherwise specified. Furthermore, the thickness of the coating film is based on the cured coating film.

Production of the hydroxyl group-containing resin (A)

Production of the hydroxyl group-containing acrylic resin particles (A1') with a core-shell structure

Production Example 1

In a reaction vessel equipped with a thermometer, a thermostat, a stirrer, a reflux condenser, nitrogen introduction tube, and dropping device, 130 parts of deionized water and 0.52 parts of "Aqualon KH-10" (product name, DKS Co. Ltd., emulsifier, active component of 97%) were charged, and the reaction system was stirred and mixed in a nitrogen stream, and the reaction system was heated to 80°C.

Next, 1.72 parts of the following monomer emulsion (1) and 5.3 parts of a 6% aqueous solution of ammonium persulfate were introduced into the reaction vessel and kept at 80°C for 15 minutes. Then, the remaining monomer emulsion (1) was dropped into the reaction vessel kept at the same temperature for 3 hours, and the reaction system was aged for 1 hour after the end of the dropwise addition. Then, the following monomer emulsion (2) was dropped into the reaction vessel for 1 hour, and after aging for 1 hour, 20 parts of a 5% aqueous solution of triethylamine was gradually added to the reaction vessel while cooling the same to 30°C, and the reaction product was discharged while being filtered with a 100-mesh nylon cloth, whereby the hydroxyl group-containing acrylic resin particles (A1'-1) with a solid content concentration of 30% was obtained. The obtained hydroxyl group-containing acrylic resin particles (A1'-1) had an acid value of 16 mgKOH/ g, a hydroxyl value of 66 mgKOH/ g, and a glass transition temperature of 21°C.

The monomer emulsion (1): 42 parts of deionized water, 0.72 parts of "Aqualon KH-10", 2 parts of methylene bisacrylamide, 5 parts of styrene, 15 parts of methyl methacrylate, 5 parts of 2-hydroxyethyl methacrylate, and 23 parts of n-butyl acrylate were mixed and stirred to obtain the monomer emulsion (1).

The monomer emulsion (2): 42 parts of deionized water, 0.72 parts of "Aqualon KH-10", 0.05 parts of ammonium persulfate, 2.5 parts of methacrylic acid, 10 parts of 2-hydroxyethyl methacrylate, 5 parts of styrene, 12.5 parts of methyl methacrylate, 10 parts of n-butyl acrylate, and 10 parts of n-butyl methacrylate were mixed and stirred to obtain the monomer emulsion (2).

Production of hydroxyl group-containing polyester resin (A2)

Production Example 2

In a reaction vessel equipped with a thermometer, a thermostat, a stirrer, a reflux condenser, and a water separator, 174 parts of trimethylolpropane, 327 parts of neopentyl glycol, 352 parts of adipic acid, 109 parts of isophthalic acid and 101 parts of 1,2-cyclohexanedicarboxylic anhydride were charged, and the reaction system was heated from 160°C to 230°C for 3 hours, and the temperature was then kept at 230°C while the condensed water formed was distilled off using the water separator, and the reaction was continued until the acid value was 3mgKOH/ g or less. 59 parts of trimellitic anhydride were added to this reaction product, and the addition reaction was carried out at 170°C for 30 minutes, the reaction product was then cooled to 50°C or less, and 75.8 parts of triethylamine were added to neutralize the same, and deionized water was gradually added, whereby the hydroxyl group-containing polyester resin solution (A2-1) with a solid content concentration of 45% was obtained. The obtained hydroxyl group-containing polyester resin had a hydroxyl value of 128 mgKOH/ g, an acid value of 35 mgKOH/ g, and a weight average molecular weight of 13,000.

Production of the hydroxyl group-containing polyurethane resin (A3)

Production Example 3

In a reaction tank equipped with a thermometer, a stirrer and reflux condenser, 211.9 parts of polytetramethylene glycol (number average molecular weight of 1000), 11.5 parts of 2,2-dimethylolpropionic acid, 6.9 parts of trimethylolpropane, 112.2 parts of isophorone diisocyanate, and 298.5 parts of methyl ethyl ketone were charged, and after replacing the reaction system with nitrogen gas, the mixture was reacted at 80°C while being stirred to obtain an NCO-terminated urethane prepolymer with a free isocyanate group content of 3.2%. The resulting methyl ethyl ketone solution was cooled to 40°C, and 493.2 g of deionized water containing 8.6 parts of triethylamine was added for emulsification, after which 275.9 parts of a 5% aqueous solution of N-(2-hydroxyethyl)ethylenediamine were added thereto and stirred for 60 minutes. The methyl ethyl ketone was then distilled off under reduced pressure and heating, and the concentration was adjusted with deionized water, whereby the hydroxyl group-containing polyurethane resin dispersion (A3-1) with a solid content of 35%, an acid value of 14 mgKOH/ g, a hydroxyl value of 12 mgKOH/ g, and an average particle size of 120 nm was obtained.

Production of the polyurethane resin not containing hydroxyl groups (U-1)

Production Example 4

In a reaction tank equipped with a thermometer, a stirrer and reflux condenser, 211.9 parts of polytetramethylene glycol (number average molecular weight of 1000), 11.5 parts of 2,2-dimethylolpropionic acid, 6.9 parts of trimethylolpropane, 112.2 parts of isophorone diisocyanate, and 298.5 parts of methyl ethyl ketone were charged, and after replacing the reaction system with nitrogen gas, the mixture was reacted at 80°C while being stirred to obtain an NCO-terminated urethane prepolymer with a free isocyanate group content of 3.2%. The resulting methyl ethyl ketone solution was cooled to 40°C, and 493.2 g of deionized water containing 9.8 parts of triethylamine was added for emulsification, after which 159.2 parts of a 5% aqueous solution of ethylenediamine were added thereto and stirred for 60 minutes. The methyl ethyl ketone was then distilled off under reduced pressure and heating, and the concentration was adjusted with deionized water, whereby the polyurethane resin not containing hydroxyl groups (U-1) with a solid content of 35%, an acid value of 14 mgKOH/ g, and an average particle size of 120 nm was obtained.

Production of the blocked polyisocyanate compound (B1)

Production Example 5

In a reaction vessel equipped with a thermometer, a thermostat, a stirrer, a reflux condenser, nitrogen introduction tube, and dropping device, 1,610 parts of "Sumidur N-3300" (product name, manufactured by Sumika Bayer Urethane, isocyanurate structure-containing polyisocyanate derived from hexamethylene diisocyanate, solid content of 100%, isocyanate group content of 21.8%), 1,200 parts of "PTMG2000" (product name, manufactured by Mitsubishi Chemical Corporation, polytetramethylene ether glycol, average molecular weight of 2,000, solid content of 100%), and 0.9 parts of 2,6-di-t-butyl-4-methylphenol were charged and mixed well, and the reaction system was heated at 130°C for 3 hours under a nitrogen stream. Next, 1,200 parts of ethyl acetate and 1,250 parts of diisopropyl malonate were charged into the reaction vessel, and while stirring the reaction system under a nitrogen stream, 14 parts of a 28% methanol solution of sodium methoxide was added to the reaction vessel, followed by stirring at 65 C. for 8 hours, and the reaction product was diluted with ethyl acetate so that the final solid content was 70%, whereby the blocked polyisocyanate compound (B1-1) with a solid content of 70% and a weight average molecular weight of 50,000 was obtained.

Production of the cellulose nanofiber (D)

Production Example 6

5 g (absolutely dry) of bleached softwood-derived dissolving kraft pulp (DKP manufactured by Buckeye Technologies, Inc.) was added to 500 ml of an aqueous solution containing 19.5 mg (0.025 mmol per 1 g of absolutely dry cellulose) of TEMPO (Sigma-Aldrich Co. LLC) and 514 mg (1.0 mmol per 1 g of absolutely dry cellulose) of sodium bromide, and the mixture was stirred until the pulp was uniformly dispersed. After adding 8 ml of 2 M aqueous sodium hypochlorite solution to the reaction system, the pH was adjusted to 10.3 with 0.5 N aqueous hydrochloric acid to start the oxidation reaction. During the reaction, the pH in the system decreased, however was adjusted to pH 10 by successively adding 3.0 N aqueous sodium hydroxide solution. After reacting the same for 2 hours, the reaction product was filtered through a glass filter and thoroughly washed with water to obtain carboxylated cellulose. The carboxyl group content of the obtained carboxylated cellulose was 0.94 mmol/ g. Then, hydrogen peroxide at 2% (w/ v) was added with respect to the 5% (w/ v) slurry of oxidized cellulose, and the pH was adjusted to 12 with 1 M sodium hydroxide. This slurry was hydrolyzed at 80°C for 2 hours. This was adjusted to 4.0% (w/ v) with water and treated 5 times with an ultra-high pressure homogenizer (20°C, 140 MPa), whereby an aqueous dispersion containing cellulose nanofiber (D-1) was obtained. The carboxyl group content of the cellulose nanofiber (D-1) was 0.94 mmol/ g, the average fiber diameter was 6.9 nm, the average fiber length was 235 nm, and the average aspect ratio was 34.

Production Example 7

An aqueous dispersion containing cellulose nanofiber (D-2) was obtained in the same manner as in Production Example 6, except that the amount of 2M sodium hypochlorite aqueous solution added to the reaction system was changed to 7.5 ml, and the number of times the hydrolyzed oxidized cellulose fiber was treated with the ultra-high pressure homogenizer (20°C, 140 MPa) was changed to 10 times. The carboxyl group content of the cellulose nanofiber (D-2) was 0.87 mmol/ g, the average fiber diameter was 7.3 nm, the average fiber length was 208 nm, and the aspect ratio was 28.

Production Example 8

An aqueous dispersion containing cellulose nanofiber (D-3) was obtained in the same manner as in Production Example 6, except that the amount of 2M sodium hypochlorite aqueous solution added to the reaction system was changed to 8.5 ml. The carboxyl group content of the cellulose nanofiber (D-3) was 1.06 mmol/ g, the average fiber diameter was 7.2 nm, the average fiber length was 352 nm, and the aspect ratio was 49.

Production Example 9

An aqueous dispersion containing cellulose nanofiber (D-4) was obtained in the same manner as in Production Example 6, except that the amount of 2M sodium hypochlorite aqueous solution added to the reaction system was changed to 14 ml. The carboxyl group content of the cellulose nanofiber (D-4) was 1.87 mmol/ g, the average fiber diameter was 5.7 nm, the average fiber length was 230 nm, and the aspect ratio was 40.

Production Example 10

5 g (absolutely dry) of bleached softwood-derived kraft pulp (whiteness of 85 %) was added to 500 ml of an aqueous solution containing 19.5 mg (0.025 mmol per 1 g of absolutely dry cellulose) of TEMPO (Sigma-Aldrich Co. LLC) and 514 mg (1.0 mmol per 1 g of absolutely dry cellulose) of sodium bromide, and the mixture was stirred until the pulp was uniformly dispersed. After adding 11 ml of 2 M aqueous sodium hypochlorite solution to the reaction system, the pH was adjusted to 10.3 with 0.5 N aqueous hydrochloric acid to start the oxidation reaction. The pH was adjusted to 10 by successively adding 0.5 N aqueous sodium hydroxide solution. After reacting the same for 2 hours, the reaction product was filtered through a glass filter and thoroughly washed with water to obtain carboxylated cellulose. The carboxyl group content of the obtained carboxylated cellulose was 1.6 mmol/ g. This was adjusted to 1.0% (w/ v) with water and treated 3 times with an ultra-high pressure homogenizer (20°C, 140 MPa), whereby an aqueous dispersion containing cellulose nanofiber (D-5) was obtained. The carboxyl group content of the cellulose nanofiber (D-5) was 1.6 mmol/ g, the average fiber diameter was 3.0 nm, the average fiber length was 753 nm, and the average aspect ratio was 251.

Production Example 11

An aqueous dispersion containing cellulose nanofiber (D-6) was obtained in the same manner as in Production Example 6, except that the amount of hydrogen peroxide added to the 5 % (w/ v) slurry of oxidized cellulose was changed to 10 % (w/v) with respect to the oxidized cellulose. The carboxyl group content of the cellulose nanofiber (D-6) was 0.92 mmol/ g, the average fiber diameter was 6.5 nm, the average fiber length was 126 nm, and the aspect ratio was 19.

Production Example 12

An aqueous dispersion containing cellulose nanofiber (D-7) was obtained in the same manner as in Production Example 6, except that the amount of hydrogen peroxide added to the 5 % (w/ v) slurry of oxidized cellulose was changed to 0.5 % (w/v) with respect to the oxidized cellulose, and the number of times the hydrolyzed oxidized cellulose fiber was treated with the ultra-high pressure homogenizer (20°C, 140 MPa) was changed to 4 times. The carboxyl group content of the cellulose nanofiber (D-7) was 0.95 mmol/ g, the average fiber diameter was 7.2 nm, the average fiber length was 370 nm, and the aspect ratio was 51.

Production Example 13

An aqueous dispersion containing cellulose nanofiber (D-8) was obtained in the same manner as in Production Example 6, except that the amount of 2M sodium hypochlorite aqueous solution added to the reaction system was changed to 6.5 ml. The carboxyl group content of the cellulose nanofiber (D-8) was 0.71 mmol/ g, the average fiber diameter was 8.2 nm, the average fiber length was 268 nm, and the aspect ratio was 33.

Production Example 14

An aqueous dispersion containing cellulose nanofiber (D-9) was obtained in the same manner as in Production Example 6, except that the amount of 2M sodium hypochlorite aqueous solution added to the reaction system was changed to 10 ml. The carboxyl group content of the cellulose nanofiber (D-9) was 1.18 mmol/ g, the average fiber diameter was 5.3 nm, the average fiber length was 241 nm, and the aspect ratio was 45.

Incidentally, the cellulose nanofiber (D-4) to cellulose nanofiber (D-9) are the cellulose nanofibers for Comparative Examples.

Production of phosphoric acid group-containing acrylic resin

Production Example 15

In a reaction vessel equipped with a thermometer, a thermostat, a stirrer, a reflux condenser, and dropping device, a mixed solvent of 27.5 parts of methoxypropanol and 27.5 parts of isobutanol was charged, and heated to 110°C. Next, 121.5 parts of a mixture consisting of 25 parts of styrene, 27.5 parts of n-butyl methacrylate, 20 parts of "isostearyl acrylate" (product name, manufactured by OSAKA ORGANIC CHEMICAL INDUSTRY LTD., branched higher alkyl acrylate), 7.5 parts of 4-hydroxybutyl acrylate, 15 parts of the phosphoric acid group-containing polymerizable monomer described below, 12.5 parts of 2-methacryloyloxyethyl acid phosphate, 10 parts of isobutanol and 4 parts of t-butyl peroxy octanoate were added to the above-mentioned mixed solvent for 4 hours, and a mixture consisting of 0.5 parts of t-butyl peroxy octanoate and 20 parts of isopropanol was further added dropwise for 1 hour. The reaction system was then stirred and aged for 1 hour, whereby a phosphoric acid group-containing acrylic resin solution with a solid content concentration of 50% was obtained. The acid value of this resin due to the phosphoric acid group was 83 mgKOH/ g, the hydroxyl value was 29 mgKOH/ g, and the weight average molecular weight was 10,000.

The phosphate group-containing polymerizable monomer: In a reaction vessel equipped with a thermometer, a thermostat, a stirrer, a reflux condenser, and dropping device, 57.5 parts of monobutyl phosphate and 41 parts of isobutanol were charged, and after being heated to 90°C, 42.5 parts of glycidyl methacrylate were dropped for 2 hours, and the reaction system was further stirred and aged for 1 hour. Then, 59 parts of isopropanol were added, whereby the phosphoric acid group-containing polymerizable monomer solution with a solid content concentration of 50% was obtained. The acid value of the resulting monomer due to the phosphoric acid group was 285 mgKOH/ g.

Production of glitter pigment dispersion

Production Example 16

In a stirring mixing vessel, 21.4 parts (solid content of 15 parts) of "ALPASTE 6360NS" (product name, manufactured by Toyo Aluminium K.K., aluminum pigment paste, aluminum content of 70%), 10 parts (solid content of 5 parts) of the phosphate group-containing acrylic resin solution obtained in Production Example 15, and 35 parts of 2-ethyl-1-hexanol were mixed uniformly, whereby the glitter pigment dispersion (P-1) was obtained.

Production of an aqueous coating composition

Example 1

66.4 parts of the glitter pigment dispersion (P-1) obtained in Production Example 16, 83.3 parts (solid content of 25 parts) of the hydroxyl group-containing acrylic resin particles (A1'-1) obtained in Production Example 1, 55.6 parts (solid content of 25 parts) of the hydroxyl group-containing polyester resin solution (A2-1) obtained in Production Example 2, 57.1 parts (solid content of 20 parts) of the hydroxyl group-containing polyurethane resin dispersion (A3-1) obtained in Production Example 3, 42.9 parts (solid content of 30 parts) of the blocked polyisocyanate compound (B1-1) obtained in Production Example 5, and 75 parts (solid content of 3 parts) of the cellulose nanofiber (D-1) solution obtained in Production Example 6 were uniformly mixed. Then, triethylamine and deionized water were added, whereby the aqueous coating composition No. 1 with the pH of 8.2, the coating material solid content of 25%, and the viscosity of 30 seconds according to Ford Cup No. 4 at 20°C, was obtained.

Examples 2 to 5, and Comparative Examples 1 to 6

Each of the aqueous coating compositions No. 2 to 11 with a viscosity of 30 seconds according to Ford Cup No. 4 at 20°C were obtained in the same manner as in Example 1, except that the blending compositions were changed to those as shown in Table 1 below.
Incidentally, the blending compositions shown in Table 1 are based on the solid content mass of each component.

[Table 1]

Table 1

| | | | Example | | | | | Comparative Example | | | | | |
|---|---|---|---|---|---|---|---|---|---|---|---|---|---|
| | | | 1 | 2 | 3 | 4 | 5 | 1 | 2 | 3 | 4 | 5 | 6 |
| Aqueous coating composition No. | | | 1 | 2 | 3 | 4 | 5 | 6 | 7 | 8 | 9 | 10 | 11 |
| Glitter pigment dispersion | Pigment dispersion name | | P-1 | P-1 | P-1 | P-1 | P-1 | P-1 | P-1 | P-1 | P-1 | P-1 | P-1 |
| | Hydroxyl group-containing resin(A) | Phosphoric acid group-containing acrylic resin solution | 5 | 5 | 5 | 5 | 5 | 5 | 5 | 5 | 5 | 5 | 5 |
| | Glitter pigment (C) | "ALPASTE 6360NS" | 15 | 15 | 15 | 15 | 15 | 15 | 15 | 15 | 15 | 15 | 15 |
| Hydroxyl group-containing resin(A) | | Acrylic resin particles (A1'-1) | 25 | 25 | 25 | 25 | 25 | 25 | 25 | 25 | 25 | 25 | 25 |
| | | Polyester resin solution (A2-1) | 25 | 25 | 25 | 25 | 25 | 25 | 25 | 25 | 25 | 25 | 25 |
| | | Polyurethane resin dispersion (A3-1) | 20 | | | | | 20 | 20 | 20 | 20 | 20 | 20 |
| Other resins | | Polyurethane resin dispersion (U-1) | | 20 | 20 | 20 | 20 | | | | | | |

(continued)

|  |  |  | Example |  |  |  |  | Comparative Example |  |  |  |  |  |
|---|---|---|---|---|---|---|---|---|---|---|---|---|---|
|  |  |  | 1 | 2 | 3 | 4 | 5 | 1 | 2 | 3 | 4 | 5 | 6 |
| Aqueous coating composition No. |  |  | 1 | 2 | 3 | 4 | 5 | 6 | 7 | 8 | 9 | 10 | 11 |
| Curing agent (B) | Blocked polyi-socyanate compound (B1) | Blocked polyi-socyanate compound (B 1-1) | 30 | 30 | 25 | 25 | 25 | 30 | 30 | 30 | 30 | 30 | 30 |
|  | Melamine resin (B2) | "Cymel 325" (*1) |  |  | 5 | 5 | 5 |  |  |  |  |  |  |
| Cellulose nanofiber (D) | Cellulose nanofiber (D-1) |  | 3 | 3 | 3 |  |  |  |  |  |  |  |  |
|  | Cellulose nanofiber (D-2) |  |  |  |  | 3 |  |  |  |  |  |  |  |
|  | Cellulose nanofiber (D-3) |  |  |  |  |  | 3 |  |  |  |  |  |  |
|  | Cellulose nanofiber (D-4) |  |  |  |  |  |  | 3 |  |  |  |  |  |
|  | Cellulose nanofiber (D-5) |  |  |  |  |  |  |  | 3 |  |  |  |  |
|  | Cellulose nanofiber (D-6) |  |  |  |  |  |  |  |  | 3 |  |  |  |
|  | Cellulose nanofiber (D-7) |  |  |  |  |  |  |  |  |  | 3 |  |  |
|  | Cellulose nanofiber (D-8) |  |  |  |  |  |  |  |  |  |  | 3 |  |
|  | Cellulose nanofiber (D-9) |  |  |  |  |  |  |  |  |  |  |  | 3 |

(*1) "Cymel 325": product name, manufactured by Allnex Japan Inc., imino group-containing melamine resin, solid content of 80%.

Productioin of test object to be coated

A thermosetting epoxy resin-based cationic electrodeposition coating material composition (product name "Elecron GT-10", manufactured by Kansai Paint Co.,Ltd.) was electrodeposited to a film thickness of 20 $\mu$m on a zinc phosphate-treated cold-rolled steel sheet, and cured by being heated at 170°C for 30 minutes. In this way, an object to be coated was produced with an electrodeposited coating film formed on a steel sheet.

Productioin of test apply plate

Example 6

"WP-505T" (product name, manufactured by Kansai Paint Co., Ltd., polyester melamine resin-based aqueous intermediate coating material) was electrostatically applied to the object to be coated obtained above using a rotary atomizing electrostatic application machine to a cured film thickness of 30 $\mu$m, and left for 5 minutes, whereby an uncured intermediate coating film was formed.

Next, the aqueous coating composition No. 1 was electrostatically applied to the uncured intermediate coating film using a rotary atomizing electrostatic application machine so that the dry film thickness was 15 $\mu$m, and after being left for 5 minutes, the same was preheated at 80°C for 3 minutes, whereby an uncured basecoat coating film was formed.

Next, "SOFLEX #520 Clear" (product name, manufactured by Kansai Paint Co., Ltd., a two-component acrylic urethane-based organic solvent-type clear coating composition containing hydroxyl group-containing acrylic resin and polyisocyanate compound) was electrostatically applied to the basecoat coating film so that the dry film thickness was 35 μm, and was left for 7 minutes, whereby a clear coating film was formed.

Next, the same was heated at 80°C for 30 minutes to heat-cure the intermediate coating film, the basecoat coating film, and the clear coating film, whereby a test apply plate was produced.

Examples 7 to 10, and Comparative Examples 7 to 12

Test plates were produced in the same manner as in Example 6, except that the type of aqueous coating composition was changed to those as shown in Table 2 below.

Each test plate obtained above was evaluated based on the following test method. The evaluation results are shown in Table 2 below.

(Test Method)

Finished appearance: Finished appearance was evaluated based on the Long Wave (LW) value and Short Wave (SW) value measured using a Wave Scan (product name, manufactured by BYK Gardner).

LW value: An index of smoothness, and the smaller the LW value, the higher the smoothness of the coating surface. A value of 10 or less is considered to be acceptable.

SW value: An index of image sharpness, and the smaller the SW value, the higher the image sharpness of the coating surface. A value of 15 or less is considered to be acceptable.

Flip-flop property: Using a multi-angle spectrophotometer (product name "MA-68II", manufactured by x-Rite), the L* value at a light receiving angle of 15 degrees (L*15 value) and the L* value at a light receiving angle of 75 degrees (L*75 value) were measured, and the FF value of the coating film was calculated based on the following formula to evaluate the flip-flop property. A value of 2 or more is considered to be acceptable.

$$\text{FF value} = L^*15 \text{ value} / L^*75 \text{ value}$$

[Table 2]

Table 2

| | | Aqueous coating composition No. | Evaluation result | | | | |
|---|---|---|---|---|---|---|---|
| | | | LW value | SW value | $L^*15$ value | $L^*75$ value | FF value |
| Example | 6 | 1 | 5 | 10 | 104 | 40 | 2.6 |
| | 7 | 2 | 6 | 12 | 103 | 38 | 2.7 |
| | 8 | 3 | 5 | 8 | 101 | 42 | 2.4 |
| | 9 | 4 | 6 | 7 | 98 | 44 | 2.2 |
| | 10 | 5 | 8 | 13 | 100 | 38 | 2.6 |
| Comparative Example | 7 | 6 | 4 | 11 | 89 | 51 | 1.7 |
| | 8 | 7 | 18 | 21 | 89 | 46 | 1.9 |
| | 9 | 8 | 3 | 7 | 91 | 53 | 1.7 |
| | 10 | 9 | 11 | 17 | 102 | 37 | 2.8 |
| | 11 | 10 | 10 | 19 | 101 | 43 | 2.3 |
| | 12 | 11 | 4 | 12 | 93 | 48 | 1.9 |

The above provides a specific description of the embodiments and examples of the present invention, however the present invention is not limited to the above-described embodiments, and various modifications based on the technical ideas of the present invention are possible.

For example, the configurations, methods, processes, shapes, materials and numerical values given in the above-described embodiments and examples are merely examples, and different configurations, methods, processes, shapes, materials and numerical values may be used as necessary.

Furthermore, the configurations, methods, processes, shapes, materials and numerical values of the above-described embodiments may be combined with each other as long as they do not deviate from the spirit of the present invention.

**Claims**

1. An aqueous coating composition comprising a hydroxyl group-containing resin (A), a curing agent (B), a glitter pigment (C), and a cellulose nanofiber (D), wherein
   the cellulose nanofiber (D) has a carboxyl group content of 0.80 to 1.10 mmol/ g with respect to an absolutely dry mass of the cellulose nanofiber and has an average aspect ratio of 20 or more and less than 50.

2. The aqueous coating composition according to claim 1, wherein
   the glitter pigment (C) includes an aluminum pigment.

3. A multilayer coating film forming method comprising in sequence:

   step (1) of applying an intermediate coating composition on an object to be coated so as to form an intermediate coating film;
   step (2) of applying the aqueous coating composition according to claim 1 or 2 on the intermediate coating film which has been formed in the step (1) so as to form a basecoat coating film;
   step (3) of applying a clear coating composition on the basecoat coating film which has been formed in the step (2) so as to form a clear coating film; and
   step (4) of heating and curing, all at once, the intermediate coating film which has been formed in the step (1), the basecoat coating film which has been formed in the step (2), and the clear coating film which has been formed in the step (3).

## INTERNATIONAL SEARCH REPORT

| International application No. |
| --- |
| **PCT/JP2023/033345** |

**A.    CLASSIFICATION OF SUBJECT MATTER**

*C09D 201/06*(2006.01)i; *B05D 1/36*(2006.01)i; *B05D 3/02*(2006.01)i; *B05D 5/06*(2006.01)i; *B05D 7/24*(2006.01)i; *C09D 5/02*(2006.01)i; *C09D 5/32*(2006.01)i; *C09D 7/61*(2018.01)i

FI:    C09D201/06; B05D1/36 B; B05D3/02 Z; B05D5/06 101A; B05D7/24 302C; B05D7/24 303A; B05D7/24 303C; B05D7/24 303G; C09D5/02; C09D5/32; C09D7/61

According to International Patent Classification (IPC) or to both national classification and IPC

**B.    FIELDS SEARCHED**

Minimum documentation searched (classification system followed by classification symbols)

C09D201/06; B05D1/36; B05D3/02; B05D5/06; B05D7/24; C09D5/02; C09D5/32; C09D7/61

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2020/066980 A1 (KANSAI PAINT CO., LTD.) 02 April 2020 (2020-04-02) paragraphs [0093], [0094], [0240], tables 1, 2, example 46 | 1-3 |
| A | WO 2021/002196 A1 (KANSAI PAINT CO., LTD.) 07 January 2021 (2021-01-07) entire text | 1-3 |
| A | JP 2014-132091 A (DKS CO., LTD.) 17 July 2014 (2014-07-17) entire text | 1-3 |
| A | WO 2019/198429 A1 (DKS CO., LTD.) 17 October 2019 (2019-10-17) entire text | 1-3 |
| A | JP 2021-155470 A (DKS CO., LTD.) 07 October 2021 (2021-10-07) entire text, all drawings | 1-3 |
| A | WO 2021/215502 A1 (OJI HOLDINGS CORP.) 28 October 2021 (2021-10-28) entire text, all drawings | 1-3 |

☐ Further documents are listed in the continuation of Box C.      ✓ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **24 November 2023** | **05 December 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/033345**

| Patent document cited in search report | | | Publication date (day/month/year) | Patent family member(s) | Publication date (day/month/year) |
|---|---|---|---|---|---|
| WO | 2020/066980 | A1 | 02 April 2020 | US 2021/0348004 A1 paragraphs [0111], [0112], [0293], tables 1, 2, example 46 | |
| WO | 2021/002196 | A1 | 07 January 2021 | US 2022/0348773 A1 entire text | |
| JP | 2014-132091 | A | 17 July 2014 | (Family: none) | |
| WO | 2019/198429 | A1 | 17 October 2019 | (Family: none) | |
| JP | 2021-155470 | A | 07 October 2021 | (Family: none) | |
| WO | 2021/215502 | A1 | 28 October 2021 | US 2023/0174678 A1 entire text, all drawings | |

Form PCT/ISA/210 (patent family annex) (January 2015)

**EP 4 596 647 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009155537 A